(19) Europäisches Patentamt
European Patent Office
Office européen des brevets

(11) EP 1 739 321 A2

(12) EUROPEAN PATENT APPLICATION

(43) Date of publication:
03.01.2007 Bulletin 2007/01

(21) Application number: 06013308.9

(22) Date of filing: 28.06.2006

(51) Int Cl.:
*F16D 69/00* (2006.01) *F16H 61/00* (2006.01)
*C10M 141/10* (2006.01) *C10M 163/00* (2006.01)
*C10N 40/04* (2006.01)

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(30) Priority: 30.06.2005 US 695164 P

(71) Applicant: Afton Chemical Corporation
Richmond,
VA 23219 (US)

(72) Inventors:
- Cameron, Timothy M.
Flint, Michigan 48532 (US)
- Iyer, Ramnath N.
Glen Allen, Virginia 23059 (US)
- Jao, Tze-Chi
Glen Allen, Virginia 23060 (US)

(74) Representative: Dunleavy, Kevin James
Knoble & Yoshida,
p/o De Vries & Metman,
Overschiestraat 180
1062 XK Amsterdam (NL)

# (54) Methods for improved power transmission performance

(57) Advanced methods are provided for achieving improved power transmission performance, and unique fluid compositions useful for practicing such methods are also presented. In particular a method is provided for reducing NVH in a power transmission apparatus having a friction torque transfer apparatus, such as, e.g., a shifting clutch, comprising maintaining a negative $\partial\mu/\partial T$ slope, and/or a negative $\partial\mu/\partial P$ slope, during engagement of the friction torque transfer apparatus.

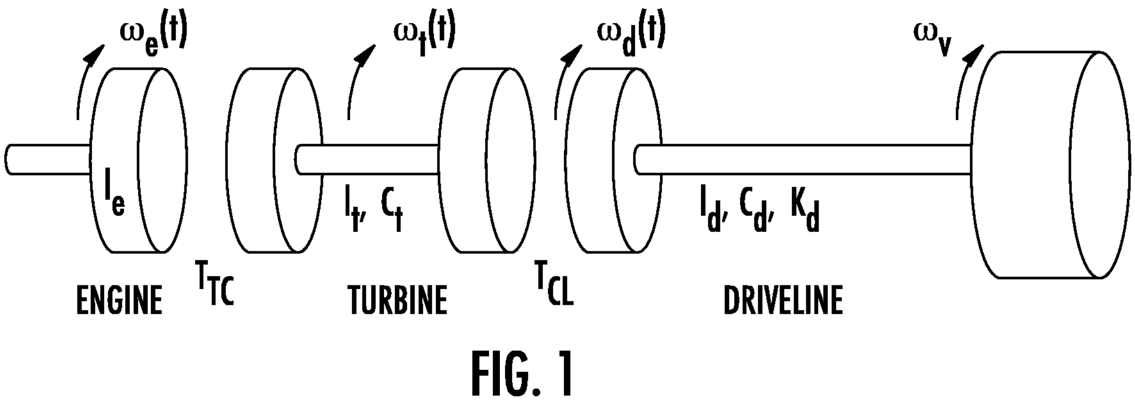


FIG. 1

EP 1 739 321 A2

## Description

### FIELD OF THE INVENTION

The present disclosure relates to methods for providing improved power transmission performance in power transmission applications.

### BACKGROUND OF THE INVENTION

An automatic transmission in a vehicle generally includes a multiple disk clutch in which a plurality of friction plates, each having a friction material bonded to a surface of a metal substrate (core plate), and a plurality of separator plates, each constituted by a single plate or more, are arranged in an alternating sequence. In an automatic transmission lubricated with transmission fluid, these plates are frictionally connected/disconnected to/from one another so that driving force is transmitted/released. Wet friction materials used in transmission clutches have included paper friction materials, carbon fiber friction materials, elastomeric friction materials, sintered friction metals, and so forth. The term "wet", in this general context, refers to a friction material wetted with transmission fluid.

New and advanced transmission systems are being developed by the automotive industry. These new systems often involve high-energy requirements. Component protection technology must be developed to meet the increasing energy requirements of these advanced systems. Commercially, it is known to add various additive packages to automatic transmission fluid, including, among other things, extreme pressure agents, antiwear agents, antioxidant systems, corrosion inhibitor systems, metal deactivators, anti-rust agents, friction modifiers, dispersants, detergents, anti-foam agents, and/or viscosity index improvers. However, not all additives interact predictably or well with one another. The friction properties are particularly important in clutches that need more friction to transfer torque but less friction in gears, bearings and seals. As a lubricant in a transmission, the fluid used in the clutches is also in the gears. Reducing friction in the gears, bearings and seals increases the lives of these components and improves fuel mileage, but reduces torque capacity of the clutch and the ability to transmit power. When friction is reduced, higher clutch forces are needed to achieve sufficient torque capacity, which can lead to mechanical failures.

An important performance requirement for an automatic transmission fluid is the ability to prevent noise, vibration, and harshness from occurring in the clutches of a transmission. Automotive power transmission fluids are being called upon to provide specific frictional properties under very demanding conditions of temperature and pressure. For instance, multiple plate disk clutches are used extensively for shifting gears in automatic transmissions under high static and quasi-static friction conditions. During shifting, one or more clutches is engaging or disengaging. In these active clutches the automatic transmission fluid and friction material experience substantial changes in pressure, temperature, and sliding speed. The frictional interaction of the automatic transmission fluid and friction material is a function of these variables, so the coefficient of friction has tended to change during clutch engagement. Changes in a fluid's frictional properties as a function of relative sliding speed, temperature, or pressure as a result of these conditions may lead to performance degradation in the vehicle "feel" that is readily discernible to the vehicle operator and passengers. Such discernible noise, vibration and harshness effects may include shift chatter or squawk in the shifting clutches, shudder or vibration in slipping torque converter clutches, and/or harsh shifts ("gear change shock"), collectively referred to as "NVH" herein. Frictional properties of a fluid ideally would be selected to suppress NVH in the clutches. Moreover, an automatic transmission fluid ideally would reduce occurrence of NVH without compromising the frictional properties needed for good shifting performance. For instance, the static friction level is important in an automatic transmission where the clutch pack must have sufficient holding capacity to transmit power from the engine to the wheels. In addition, conventional automatic transmission fluids can be highly susceptible to significant loss of the desired frictional properties as they age, and an ideal fluid would address that consideration as well.

There is a need for transmission fluids that reduce NVH while maintaining high static and quasi-static friction, and/or which have improved anti-NVH durability upon aging, especially under conditions of high temperatures and pressures. Such fluids would minimize equipment and performance problems while maximizing the interval between fluid changes. By enabling smooth engagement of torque converter and shifting clutches, these fluids would minimize NVH, and in some cases improve fuel economy, over a longer fluid lifetime.

### SUMMARY OF THE INVENTION

The present invention relates to the advanced methods for providing enhanced power transmission performance.

In one embodiment, a method is provided for reducing NVH in a power transmission apparatus having a friction torque transfer apparatus, comprising maintaining a negative $\partial\mu/\partial T$ slope during engaging, slipping or modulating thereof, where "$\mu$" represents coefficient of friction and "T" represents temperature. In one embodiment, the reduction obtained

in NVH may be achieved in the form of a reduction of one or more of shift chatter, shudder, vibrations and/or harshness relative to a reference fluid comprising a commercial ATF product. Under pre-selected conditions, this negative ∂μ/∂T slope has been found to be maintainable without loss of static and quasi-static friction properties of the friction torque transfer apparatus during engaging, slipping or modulating thereof.

The discovery that the provision and maintenance of a negative ∂μ/∂T slope during engaging, slipping or modulating of a friction torque transfer apparatus can reduce NVH is surprising and runs counter to the conventional theoretical thinking in the power transmission field. The present investigators also have discovered that merely using a transmission fluid in the operation of a power transmission which yields a positive slope of coefficient of friction (μ) versus sliding velocity (v) is inadequate to significantly suppress and control NVH. It has surprisingly been discovered that the transmission fluid run in the transmission must possess a negative friction dependence on temperature in the operation of the friction torque transfer mechanism of the power transmission to suppress NVH in a meaningful manner. In one embodiment, this applies to prevention of NVH (e.g., chatter, squawk, shudder, and/or noise) during the engagement of a friction torque transfer mechanism, such as a shifting clutch. It ensures a smooth shift in a clutch when plate temperature at the friction interface is rising during engagement. Provision of negative ∂μ/∂T condition in a transmission makes it possible to raise the overall value of the coefficient of friction at essentially all or all sliding speeds and at the same time prevent squawk, shudder and chatter from occurring in the clutches. It also prevents lock-up when a limited amount of slipping is desired, as is often the case in a torque converter clutch or a limited slip differential clutch. The negative ∂μ/∂T condition is important in formulating higher coefficient of friction and higher torque capacity fluids that will still suppress NVH. The significant improvements in torque capacity and NVH suppression may also make it possible for transmissions which are smaller and/or operate at lower pressure, all of which improve fuel economy. The discovered significance of the negative ∂μ/∂T condition is not necessarily limited to any particular modality for providing this prescribed performance condition.

The above-indicated inventive methodology of providing negative ∂μ/∂T condition in a power transmission is applicable to friction torque transfer apparatus in general, including, for example, a shifting clutch, a starting clutch, a torque converter clutch, a band clutch, disk or plate clutch, a limited slip differential clutch, and so forth. The types of power transmission in which the inventive methodology may be applied are not particularly limited, and include, e.g., automatic transmissions, manual transmissions, continuously variable transmissions, and manual automatic transmissions, and so forth. These transmissions may be used in a variety of applications such as automotive, marine, aerospace, industrial, and so forth. In a particular embodiment, the inventive method is applied to a multi-speed automatic transmission, such as a 4-speed or more transmission. In one embodiment, it may be selected from the group consisting of a 5-speed automatic transmission, a 6-speed automatic transmission, and a 7-speed automatic transmission, and particularly 6-speed automatic transmissions. The transmission apparatus also may comprise a dual-clutch transmission or a heavy duty automatic transmission.

In one embodiment, appropriate selection of a transmission fluid formulation for lubricating a friction torque transfer apparatus during operation of the transmission apparatus is responsible for providing the condition of a negative ∂μ/∂T during engaging, slipping or modulating of the friction torque transfer apparatus. That is, additive and fluid compositions have been developed for transmissions to provide high static and quasi-static friction properties while minimizing NVH characteristics. These compositions are also effective at providing the same degree of NVH-suppression performance after aging of the fluid.

In another embodiment, a method is provided for reducing NVH in a power transmission apparatus having a friction torque transfer apparatus, such as any of the above-indicated clutching mechanisms, comprising maintaining a negative ∂μ/∂P slope during engaging, slipping or modulating thereof, where "P" represents the pressure on the clutch surfaces

The foregoing general description and the following detailed description are exemplary and explanatory only and are intended to provide further explanation of the present invention, as claimed.

## BRIEF DESCRIPTION OF THE FIGURES

FIG. 1 is a diagram of a power train model for clutch engagement in accordance with an embodiment of the invention.

FIG. 2 is a graph of a unit impulse response of a $2^{nd}$ Order LTI system of a power train model according to an embodiment of the invention.

FIG. 3 is a graph of a unit step response of a $2^{nd}$ Order LTI system of a power train model according to an embodiment of the invention.

FIGS. 4-10 are plots of squawk pressure versus ∂μ/∂T as measured at different sliding speeds at a pressure of 0.79 $N/mm^2$, respectively. The respective sliding speeds at which measurements were taken were as follows: FIG. 4 (5 rpm); FIG. 5 (10 rpm); FIG. 6 (20 rpm); FIG. 7 (50 rpm); FIG. 8 (100 rpm); FIG. 9 (200 rpm); and FIG. 10 (250 rpm).

FIG. 11 is plot of $R^2$ (for correlation of $\partial\mu/\partial T$ to squawk pressure) versus sliding speed (v, rpm) for the tests of FIGS. 4-10 conducted at the test pressure condition of 0.79 $N/mm^2$.

FIGS. 12-17 are plots of squawk pressure versus $\partial\mu/\partial T$ as measured at different sliding speeds at a pressure of 3.40 $N/mm^2$, respectively. The respective sliding speeds at which measurements were taken were as follows: FIG. 12 (5 rpm); FIG. 13 (10 rpm); FIG. 14 (20 rpm); FIG. 15 (50 rpm); FIG. 16 (100 rpm); and FIG. 17 (200 rpm).

FIGS. 18-19 show coefficient of friction $\mu$ results observed for the eight test fluids at a pressure of 0.79 $N/mm^2$ and at temperatures of 40°C and 120°C, respectively.

FIG. 20 is a plot of coefficient of $\partial\mu/\partial T$ (reported as a value that has been multiplied by the number negative one, i.e., "x -1") versus sliding speed (v, rpm) at a pressure of 0.79 $N/mm^2$.

FIGS. 21-28 are plots of squawk pressure versus $\partial\mu/\partial P$ as measured at different sliding speeds, temperatures and pressures. For FIGS. 21-24, $\partial\mu/\partial P$ was measured at 40°C between 3.40 and 0.79 $N/mm^2$ at sliding speeds of 5, 50, 200 and 250 rpm, respectively. For FIGS. 25-28, $\partial\mu/\partial P$ was measured at 120°C between 3.40 and 0.79 $N/mm^2$ at sliding speeds of 5, 50, 200 and 250 rpm, respectively.

FIGS. 29 shows plots of $R^2$ versus sliding speed (v, rpm) for the data reported in FIGS. 21-28, at temperatures of 40°C and 120°C, respectively.

## DETAILED DESCRIPTION OF THE PREFERRED EMBODIMENTS

Vehicles meeting stringent demands of consumers require durability and performance in all of the vehicular systems. One of the most important systems is the power transmission system ("transmission") which transmits the power generated by the automobile engine to the wheels. It being one of the most complex systems in the vehicle, it is also one of the most costly to diagnose, repair, or replace. The transmission usually includes, *inter alia,* a clutch with plates, a torque converter, and a plurality of gears to alter the torque and speed relationship of the power delivered to the wheels by changing the gear ratio.

Discriminating consumers primarily desire ride comfort, high performance, low maintenance (high mileage between servicing), and extended life expectancy. However, with the advent of new transmission technologies, old standards of performance which were previously met with approval are now becoming more challenging and problematic.

For instance, the advent of electronically controlled converter clutch (ECCC) designs, as well as vehicles equipped with a continuously variable transmission (CVT) and advances in aerodynamic body design generally result in passenger cars with smaller transmissions which tend to operate with higher energy densities and higher operating temperatures. Consumers also are keenly aware of the "feel" of the driving experience that a vehicle offers. Unusual, abnormal or unexpected vehicular noises, vibrations, and/or ride harshness make the driving experience less comfortable. Consumers also want service intervals for replacing fluids to be extended as much as possible without risking performance or engine equipment integrity. Such changes challenge lubricant suppliers to formulate automatic transmission fluids with new and unique performance characteristics. Original equipment manufacturers (OEMs) also desire automatic transmission fluids with frictional characteristics capable of meeting the requirements of ECCC, CVT, and other designs while retaining sufficient performance in regard to NVH, durability, antiwear, etc.

As power transmission fluids are desired which operate under increasingly severe conditions, the fluids used to lubricate those transmissions ideally would be formulated not only to endure higher temperatures and pressures, but also control NVH. To reduce equipment problems and increase the interval between transmission fluid changes, the transmission additive packages ideally would be formulated so that important fluid properties change as little as possible during a service life in the face of these stresses.

A need exists for an effective way of addressing friction, wear and durability problems associated with automatic transmissions, such as to meet the needs of OEM automobile designers and suppliers, for extended transmission fluid life and durability while also improving anti-NVH to increase consumer satisfaction. This invention addresses these and other needs.

In one particular non-limiting embodiment, a method is provided for reducing noise-vibration-harshness ("NVH") in a power transmission apparatus having a shifting clutch, comprising maintaining a negative $\partial\mu/\partial T$ slope during engagement of the shifting clutch. How this condition is achieved in the transmission is not particularly limited. It may be achieved via a novel approach in formulating the transmission fluid, as described in more detail elsewhere herein.

The reduction obtained in NVH may be achieved in the form of a reduction of one or more of shift shudder, chatter, squawk, or similar noise, vibration and/or harshness, relative to a reference fluid comprising a commercial ATF product. Under pre-selected conditions, this negative $\partial\mu/\partial T$ slope has been found to be maintainable without loss of static and quasi-static friction properties at the shifting clutch during engagement.

For purposes herein, "NVH" collectively refers to noise-vibration-harshness as those terms are defined herein. "NVH suppression" refers to a reduction in one or more of noise, vibration, and/or harshness. Chatter, shudder and squawk all originate from a vibration(s) within the transmission system and generally are compound parameters comprised of noise and vibration "Shift chatter", "chatter noise" or "chatter" for short, refers to a NVH parameter that is

generally balanced in being observed as both noise and vibration. "Squawk" refers to an NVH parameter predominantly observed as noise and less as vibration. "Squawk pressure" is measured on a ZF GK test rig apparatus, which is commercially available from the ZF Group, Friedrichshafen Germany. The clutch designated by the test rig supplier as the "E-clutch" of a ZF 6HP26 transmission is used in the ZF GK test rig. A test fluid and friction elements are loaded where applicable in the ZF GK test rig. The test rig includes an on-board computer with a programmable, graphical user interface that permits the user to select and input the desired test conditions under which squawk, static friction and quasi-static friction are to be measured, and the test results are stored by the system in retrievable formats. The ZF-GK Rig test performed on the apparatus is a test developed by ZF to measure slip controlled clutch opening and closing performance characteristics. An interchangeable intermediate shaft allows the measurement of frictional vibration that is the basis for evaluation of NVH characteristics such as squawk of the test fluid. The test uses a procedure supplied by ZF with the apparatus. For purposes herein, squawk pressure is expressed in terms of the threshold pressure beyond which squawk phenomena are observed. The higher the value of this parameter, the lower the probability of the noise or vibration phenomena occurring for a given fluid. Illustrations set forth herein may refer to squawk or "squawk pressure", although it will be appreciated that the invention has broader application to noise phenomena in general. Additionally, "Shudder" refers to an NVH parameter predominantly observed as vibration and less as noise. Harshness" refers to NVH phenomena that are predominantly sudden (e.g., shock, jerk, clunk, impulse, pop, jolt, bang, etc.) and which may be experienced by occupants as a sudden, and perhaps brief, noise or vibration or both. "Harshness" is also used by some practitioners to refer to the cumulative effects of noise and vibration on occupant comfort and fatigue (thus, e.g., a driver is less comfortable and tends to become fatigued more rapidly in a vehicle with greater harshness). "Static friction" refers to breakaway static coefficient of friction; values thereof described herein are measured on a ZF GK rig. "Quasi-static friction" refers to dynamic endpoint coefficient of friction; values thereof described herein are measured on a ZF GK test rig. In general it was found that the noise phenomena decrease with decreasing quasi-static friction level. Higher quasi-static friction is generally desirable for higher torque transmission. "Operating", as used herein, includes, but is not limited to, any functional utilization of the fluid including transmitting power, lubricating, and wetting.

The discovery that providing and maintaining a negative $\partial\mu/\partial T$ slope during engagement of the shifting clutch can reduce NVH represents a surprising discovery in the power transmission field. The present investigators also have discovered that merely using a transmission fluid in the operation of a power transmission which yields a positive slope of coefficient of friction ($\mu$) versus sliding velocity (v) is inadequate to significantly suppress and control NVH. It has surprisingly been discovered that the transmission fluid used in the transmission must induce a negative friction dependence on temperature in the engagement of the clutching mechanism of the power transmission to suppress NVH in a meaningful manner. This particularly applies, e.g., to prevention of shift shudder, chatter, or squawk during the engagement of a clutch. It ensures a smooth shift in a clutch when plate temperature at the friction interface is rising during engagement. Provision of negative $\partial\mu/\partial T$ condition in a transmission makes it possible to raise the overall value of the coefficient of friction at essentially all or all sliding speeds and at the same time prevent squawk, shudder and chatter from occurring in the clutches. The negative $\partial\mu/\partial T$ condition is important in formulating higher coefficient of friction and higher torque capacity fluids that will still suppress NVH. The significant improvements in torque capacity and NVH suppression may also make it possible for transmissions to be smaller and/or operate at lower pressure, all of which improve fuel economy. The discovered significance of the negative $\partial\mu/\partial T$ condition is not necessarily limited to any particular modality for providing this prescribed performance condition.

As another discovery of the present invention, NVH-reduction is obtained in a power transmission apparatus having a friction torque transfer apparatus by maintaining a negative $\partial\mu/\partial P$ slope during engaging, slipping or modulating thereof.

More detail on the mathematical underpinnings of the above unique approaches to modeling a transmission system is provided below. Mathematical models of friction properties in clutches suggest that the sign (positive or negative) of the slope of the friction coefficient "$\mu$" with respect to temperature "T", $\partial\mu/\partial T$, or pressure, $\partial\mu/\partial P$, has opposite effects depending on whether the clutch is engaging or disengaging. For example, having a positive $\partial\mu/\partial T$ helps to prevent vibrations when the clutch is releasing, but may promote unstable vibrations when the clutch is engaging. Consequently, the conventional wisdom in the lubricant additive industry is that the lubricant's friction coefficient should be made independent of temperature and pressure as much as possible.

## I. Noise Phenomena Model

The present invention is based in part on a new and in-depth understanding of the specific applications of automatic transmission fluids to identify which characteristic is more important so that $\mu$-T and $\mu$-P dependencies can be exploited to improve the automatic transmission fluid's ability to suppress unstable vibrations.

Multiple plate disk clutches are used extensively for shifting gears in automatic transmissions. During a shift one or more clutches is engaging or disengaging. In these active clutches the automatic transmission fluid (ATF) and friction material experience large changes in pressure, P, temperature, T, and sliding speed, v. The coefficient of friction,

$\mu$, of the ATF and friction material is a function of these variables so $\mu(v,T,P)$ also changes during clutch engagement. These changes in friction coefficient can lead to NVH phenomena such as shift shudder, chatter or squawk if the ATF properties and clutch friction material are improperly selected.

An in-depth theoretical understanding of the cause of NVH in shifting clutches is crucial in the development of a suitable ATF to work with a particular friction material. A model has been developed that identifies the relationships between ATF friction properties and NVH phenomena such as squawk. In particular, friction slope with respect to temperature, $\partial\mu/\partial T$, is identified as a primary factor in squawk. During clutch engagement negative $\partial\mu/\partial T$ increases the damping and reduces the risk of self-excited vibration. Experimental data, described below, has been collected which corroborate this model. The effect of $\partial\mu/\partial T$ on clutch release and the effects of other ATF friction properties are also discussed.

A vehicle power train experiences a combination of torsional and axial vibrations that affect vehicle performance and occupant comfort. These vibrations and their effects are major contributors to noise, vibration and harshness (NVH). Sources of NVH include engine firing pulses, valve motion, engine vibrations (torsional and axial), and tire-road interactions — any of which can excite resonance in the vehicle. Vibrations from these sources are transferred through engine mounts, transmission bearings, drive shaft bearings, tires (via steering) and axle suspensions to the passenger compartment by way of the vehicle frame, steering wheel or brake pedal. For purposes herein, driveline vibrations from clutch engagement were analyzed during a gear shift and it was determined how the friction related properties of the ATF and friction material affect them. The model of temperature in the friction interface and the dependence of the coefficient of friction ("$\mu$") on temperature ("T") are major enhancements to the understanding of the effect of friction properties on the stability (smoothness) of clutch engagement during a gear shift.

**Table A. Nomenclature**

| Symbol | Description |
|---|---|
| A | Total friction surface area = number of friction interfaces in multiple plate clutch x area of each surface |
| $c_d$, $c_t$ | Intrinsic damping in driveline, turbine |
| $c_d^*$ | Effective damping in driveline with changes in $\mu(v,P,T)$ |
| $c_{ps}$ | Specific heat of steel reaction plate |
| $\partial\mu/\partial v$, $\partial\mu/\partial P$, $\partial\mu/\partial T$ | Partial derivatives of $\mu(v,P,T)$ with respect to v, P and T |
| $I_d$, $I_t$, $I_e$ | Equivalent inertias of driveline, turbine, engine |
| $k_d$ | Driveline stiffness |
| L | Thickness of steel reaction plate (m) |
| $\mu(v,P,T)$ | Coefficient of friction of ATF and friction material |
| P(t) | Pressure applied to shifting clutch to increase friction |
| R | Effective radius of friction bands in the clutch (constant) |
| $\rho$ | Density (kg/m$^3$) of the steel reaction plate |
| T | Time duration of sliding contact in clutch |
| $T_{TC}$ | Total torque transferred by torque converter and torque converter clutch |
| $T_{CL} = \mu ARP$ | Torque transferred by shifting clutch |
| T | Temperature of ATF and friction material |
| $\tau$ | Time constant of sliding speed response: $v(t) = v_0 e^{-t/\tau}$ |
| $v(t) = R(\omega_t(t) - \omega_d(t))$ | Linear sliding speed in the shifting clutch |
| $\omega_d(t)$, $\omega_e(t)$, $\omega_t(t)$ | Driveline, engine, and turbine rotational speeds |
| $\omega_v$ | Constant reference speed at opposite end of clutch output shaft |

The major components of an automotive power train equipped with an automatic transmission are shown in FIG. 1. The engine transfers power to the transmission through the torque converter (TC) and torque converter clutch (TCC). The engine has inertia $I_e$ and turns at speed $\omega_e(t)$. The turbine includes the components from the torque converter

(excluding components tied to the engine) to the clutch pack involved in the shift. The specific clutch involved in the shift is arbitrary as long as only one clutch is engaging, as is typical. The specific values of the model parameters depend on which gears are involved. Components past the clutch are part of the driveline. The turbine components have inertia $I_t$, viscous damping $c_t$ and speed $\omega_t(t)$, and are considered rigid (infinitely stiff) relative to the driveline. The driveline has inertia $I_d$, damping $c_d$, stiffness $k_d$, and angular velocity $\omega_d(t)$. The vehicle is represented as having a constant speed during the shift. The constant speed $\omega_v$ may be chosen to represent any point of interest, e.g., the gear end of the clutch output shaft. The specific gears involved in the shift and the choice of reference speed location affect how the inertias of the driveline components are distributed, some included in $I_d$ and some in the vehicle, and the values of the damping and stiffness parameters, but they do not affect the friction characteristics or fundamental dynamics of the system.

Before an up-shift occurs the turbine is connected to the vehicle by the previous gear with a higher gear ratio, so the turbine initially rotates at a higher speed than the representative vehicle speed, $\omega_t(0) > \omega_v$. When the transmission shifts to a higher gear one clutch pack disengages and another engages, and the NVH phenomena under consideration are caused by friction in the engaging clutch plates. The torque transfer from the engine to the turbine is through the torque converter ($T_{TC}$), which has two parallel torque paths: 1) the fluid coupling between the pump and turbine impellers; and 2) the friction torque in the torque converter clutch ($T_{CL}$). The clutch torque is controlled by pressure and the ATF friction characteristics. The model represents the vibrations as predominantly torsional, although axial effects that might influence the motion can be introduced as pressure oscillations that cause forced torsional vibrations.

For analyzing squawk and shudder vibrations, in this study focus is limited to the driveline. The engine and turbine motions can become unstable, but since they are considered rigid (relative to the flexible driveline) they are not sources of vibration.

From Newton's second law the driveline equation of motion is:

$$I_d\dot{\omega}_d = T_{CL} - c_d(\omega_d - \omega_v) - k_d\int_0^t(\omega_d(\tau) - \omega_v)d\tau \qquad (1)$$

where the instantaneous clutch torque is:

$$T_{CL} = \mu ARP(t). \qquad (2)$$

The integral of the velocity difference between the two ends of the clutch output shaft gives the total twist in the shaft. The twist in the shaft multiplied by the shaft stiffness equals the reaction torque of the shaft on inertia $I_d$.

Traditional stability analysis about an equilibrium condition is inappropriate for the unsteady (non-equilibrium) conditions during a gear shift. However, if the velocity is sufficiently damped the shift will not experience vibrations due to step or ramp changes in pressure. (There can be forced vibrations if there are pressure oscillations.) Consequently, an additional time derivative of equation (1) is taken to transform it into a second order differential equation in the variable $\omega_d$, which represents the output angular velocity of the clutch, and to consider the effective damping of the equation.

The time derivative of $\omega_v$ is zero since it is constant, and the derivative is the inverse of the integration, so taking the derivative of equation (1), applying the chain rule to $T_{CL}$ (=$\mu$ARP) and rearranging terms yields:

$$I_d\ddot{\omega}_d + c_d\dot{\omega}_d + k_d\omega_d = k_d\omega_v + \dot{\mu}ARP + \mu AR\dot{P} \qquad (3)$$

The coefficient of friction, $\mu(v,T(v),P)$, is a function of sliding speed, v, pressure, P, and temperature, which also depends on sliding speed, T = T(v). Consequently, the time derivative of $\mu$ is:

$$\dot{\mu} = \frac{\partial\mu}{\partial v}\dot{v} + \frac{\partial\mu}{\partial T}\frac{dT}{dv}\dot{v} + \frac{\partial\mu}{\partial P}\dot{P} \qquad (4)$$

Sliding speed: $v = R(\omega_t - \omega_d)$ so:

$$\dot{v} = R(\dot{\omega}_t - \dot{\omega}_d) \tag{5}$$

Using equations (4) and (5), equation (3) becomes:

$$I_d\ddot{\omega}_d + c_d^*\dot{\omega}_d + k_d\omega_d = k_d\omega_v + AR\left(\mu + P\frac{\partial\mu}{\partial P}\right)\dot{P} + AR^2P\left(\frac{\partial\mu}{\partial v} + \frac{\partial\mu}{\partial T}\frac{dT}{dv}\right)\dot{\omega}_t \tag{6}$$

where the effective damping is given by

$$c_d^* = c_d + AR^2P\left(\frac{\partial\mu}{\partial v} + \frac{\partial\mu}{\partial T}\frac{dT}{dv}\right) \tag{7}$$

Instantaneous temperature variations at the friction interface may be modeled approximately as:

$$dT = \frac{2\mu vP}{\rho c_{ps}L}\cdot dt \tag{8}$$

and instantaneous variations in sliding speed are:

$$dv = \dot{v}\cdot dt \tag{9}$$

so:

$$\frac{dT}{dv} = \frac{2\mu P}{\rho c_{ps}L}\frac{v}{\dot{v}} \tag{10}$$

Substituting equation (10) into (6) and (7), the equation of motion becomes:

$$I_d\ddot{\omega}_d + c_d^*\dot{\omega}_d + k_d\omega_d = k_d\omega_v + AR\left(\mu + P\frac{\partial\mu}{\partial P}\right)\dot{P} + AR^2P\left(\frac{\partial\mu}{\partial v} + \frac{\partial\mu}{\partial T}\frac{2\mu P}{\rho c_{ps}L}\frac{v}{\dot{v}}\right)\dot{\omega}_t \tag{11}$$

and the effective damping is:

$$c_d^* = c_d + AR^2P\left(\frac{\partial\mu}{\partial v} + \frac{\partial\mu}{\partial T}\frac{2\mu P}{\rho c_{ps}L}\cdot\frac{v}{\dot{v}}\right) \qquad (12)$$

Equations (11) and (12) describe the relationship between ATF friction properties, $\partial\mu/\partial v$ and $\partial\mu/\partial T$, and shift quality as measured by the output speed of the clutch.

The clutch output speed is determined by the forcing terms on the right hand side of equation (11), by the damping coefficient equation (12), and by the inertia ($I_d$) and stiffness ($k_d$) coefficients. Equation (11) is a 2nd order differential equation in the unknown motion variable $\omega_d$. When the coefficients ($I_d$, $c_d^*$, $k_d$) of the unknown motion variable are all constant, the equation is referred to as "linear" and "time-invariant" (LTI). The time-invariance refers to the coefficients. The motion variable does vary with time. If the coefficients are time-dependent, but do not depend on the motion variable, the equation is still linear, but not time-invariant. Equation (11) is both nonlinear (the damping coefficient, $c_d^*$, depends on the unknown motion variable) and time-variant (the damping coefficient changes with time). It is not typically possible to find analytical solutions to nonlinear time-varying equations; computer solutions are generally required. Nevertheless, if the nonlinearity or time-variance is not strong, it is often possible to approximate the solution of a nonlinear time-varying equation with the solution of an LTI equation. Here the behavior of 2nd order LTI systems to impulse and step inputs is first considered, then the implications of the nonlinear damping coefficient are considered.

The "inputs" to an equation are the terms on the right-hand-side that force the system to deviate from some equilibrium condition. In equation (11) the final equilibrium condition is reached when all terms with time derivatives are zero (none of the variables are changing with time), and the clutch output speed, $\omega_d$, is equal to the constant reference speed, $\omega_V$, due to the first input $k_d\omega_V$, which is constant. The second or middle input on the right-hand-side of (11) is referred to here as theP input, and the right-most input is referred to as the $\dot{\omega}_t$ input.

The engagement of the clutch is controlled through the pressure, P. If P is zero the clutch output shaft is not connected to the turbine, and the P and $\dot{\omega}_t$ inputs are zero. In a typical engagement, the pressure is "stepped up" quickly to connect the turbine to the clutch output shaft. This has the effect of switching the $\dot{\omega}_t$ input from zero to nonzero. If this nonzero value remained constant it would look like a stair step and be called a "step input." The sudden jump in P makes the P input very large for a very brief period of time, and then it returns to zero when P reaches its constant target value. This is an "impulse input;" a sudden hit with high amplitude but short duration.

The solution of 2nd order LTI systems (the "response" of the system) to impulse and step inputs depends primarily on the damping ratio, $\zeta$, which for equation (11) is:

$$\zeta = \frac{c_d^*}{2\sqrt{k_d I_d}} \qquad (13)$$

treating the damping coefficient $c_d^*$ as constant. A 2nd order system is typically classified according to its damping ratio and the corresponding free response to an initial displacement with no force inputs on the right-hand-side:

$\zeta < 0$ Negative damping, unstable (response amplitude increases with time)
$\zeta = 0$ Undamped, non-decaying vibrations at the natural frequency
$0 < \zeta < 1$ Underdamped, decaying vibrations at the damped natural frequency
$\zeta = 1$ Critically damped, minimum damping level to suppresses vibration. With critically damped and overdamped systems it is still possible to have vibration if the inputs create "forced" vibration. It is also possible to get one oscillation in the free response if the initial velocity is in the opposite direction of the initial displacement.
$\zeta > 1$ Overdamped, no vibration, but slower convergence to steady state than in the critically damped case ($\zeta = 1$).

If the system starts from equilibrium (a constant or steady speed in this case), the vibration characteristic of the free response also applies to the impulse and step responses. To completely suppress transient vibration it is necessary for the system to be critically damped or overdamped.

FIGS. 2 and 3 show the predicted response of a LTI 2nd order system (clutch output speed in rad/s) to unit impulse and unit step inputs ("unit" inputs have an amplitude of '1') for three different damping ratios. The parameter values used for the simulations are:

$$I_d = 2 \text{ kg·m}^2$$

$$k_d = 12{,}700{,}000 \text{ N·m/rad} \quad \text{(natural frequency = 401 Hz)}$$

$$\begin{aligned} c_d^* = \; & 1{,}008 \text{ N·m·s/rad} && (\zeta = 0.1, \text{ underdamped}) \\ & 10{,}080 \text{ N·m·s/rad} && (\zeta = 1.0, \text{ critically damped}) \\ & 15{,}120 \text{ N·m·s/rad} && (\zeta = 1.5, \text{ overdamped}). \end{aligned}$$

All of these are stable responses. The clutch output speed converges to the desired value. Stability, however, is insufficient to ensure a smooth shift without vibrations. To suppress vibration for impulse and step inputs it is necessary to have a damping coefficient that provides critical or overdamping ($\zeta \geq 1$):

$$c_d^* \geq 2\sqrt{k_d I_d} \qquad (14)$$

Equation (14) shows that to suppress NVH $c_d^*$ in equation (12) should be as positive as possible. NVH during a shift is evidence that equation (14) is not satisfied, not necessarily that the system is unstable, although it may be.

The nonlinearity and time-variation in $c_d^*$ is driven largely by v and v. Once P is applied it is held relatively constant, and the variation in $\mu$ is much smaller than the variation in v and $\dot{v}$. It also is assumed that $\partial\mu/\partial T$ is relatively constant. The sliding speed during shift follows an approximately an exponential decay:

$$v(t) = v_0 e^{-t/\tau} \qquad (15)$$

where $\tau$ is the "time constant," a measure of how quickly the sliding speed converges from initial speed, $v_0$, to zero.

If the sliding speed has the form given in equation (15), then the rate of change of sliding speed is:

$$\dot{v}(t) = \frac{-v_0}{\tau} e^{-t/\tau} \qquad (16)$$

and the v/v ratio in equations (11) and (12) ratio is:

$$\frac{v(t)}{\dot{v}(t)} = -\tau \qquad (17)$$

where $\tau$ is a positive constant. Equation (17) suggests that even though v and $\dot{v}$ depend on the unknown speeds $\omega_d$ and $\omega_t$ (and their derivatives), the ratio $v/\dot{v}$ does not. In this case $c_d^*$ no longer depends on the unknown variable of motion and the equation is linear, although it may still vary with time.

In this case equations (11) and (12) may be simplified further to:

$$I_d\ddot{\omega}_d + c_d^*\dot{\omega}_d + k_d\omega_d = k_d\omega_v + AR\left(\mu + P\frac{\partial\mu}{\partial P}\right)\dot{P} + AR^2P\left(\frac{\partial\mu}{\partial v} - \frac{\partial\mu}{\partial T}\frac{2\mu P\tau}{\rho c_{ps}L}\right)\dot{\omega}_t \quad (18)$$

$$c_d^* = c_d + AR^2P\left(\frac{\partial\mu}{\partial v} - \frac{\partial\mu}{\partial T}\frac{2\mu P\tau}{\rho c_{ps}L}\right) \quad (19)$$

Equation (19) demonstrates that $\partial\mu/\partial T$ must be negative to increase the damping. All the parameters in the expression multiplying $\partial\mu/\partial T$ are positive, so $\partial\mu/\partial T$ is the only parameter that can be made negative to ensure that $c_d$* is as positive as possible. If the magnitude of the negative $\partial\mu/\partial T$ becomes too large (in absolute value), torque capacity may be reduced. Thus, small negative values of $\partial\mu/\partial T$ are particularly desirable.

The $\partial\mu/\partial v$ term in equation (19) is the $\mu$-v gradient at constant temperature, which should also be as positive as possible. The $\partial\mu/\partial T$ term is the contribution of the ATF temperature dependence to the total $\mu$-v gradient, $d\mu/dv$. The contribution of $\partial\mu/\partial T$ to the overall damping depends on the temperature rise in the fluid, which is controlled by the heat generation ($\mu vP$), the thermal capacity of the steel reaction plate ($\rho c_{ps}L$), and the duration of the shift (larger $\tau$ means a longer shift time). In general, the more negative $\partial\mu/\partial T$ the greater the damping at all sliding speeds and pressures, and consequently, the greater the NVH suppression, e.g., greater squawk resistance, that is predicted and expected from the model.

Experimental data, described in the Examples below, confirm this predictive model insofar as the provision of negative $\partial\mu/\partial T$ condition improves squawk performance in a transmission.

The coefficients of $\partial\mu/\partial T$ in the exponential curve fits shown FIGS. 4-10, which are discussed in more detail in the Examples section, provide an additional validation of the temperature model in equation (8), and the resulting damping equation (12). This coefficient represents the degree to which the $\partial\mu/\partial T$ term controls stability, and should have the same dependencies as the parameters multiplying $\partial\mu/\partial T$ in equation (12). One of those parameters is the sliding speed, v, which was also one of the experimental parameters. Equation (12) predicts that the damping should be approximately proportional to v. The coefficients of $\partial\mu/\partial T$ from the curve fits in the FIGS. 4-10 are plotted versus sliding speed in FIG. 20, which shows good linear correlation as predicted. The model also predicts that the factor multiplying $\partial\mu/\partial T$ will increase with pressure. FIG. 20 gives one data point at a higher pressure (3.4 MPa), which shows the expected increase.

From equation (12) it is indicated that positive $\partial\mu/\partial T$ is desired for smooth disengagement since $\dot{v}$ is positive when the clutch releases. However, when the clutch releases the pressure drops and there is no input energy (turbine torque) to cause self-excitation. The shaft will unwind when it is no longer carrying torque, so there is a risk of vibration due to this unwinding. There is also a risk that for a controlled release — an effort to carefully exchange the load between the releasing and engaging clutches - negative $\partial\mu/\partial T$ may cause a faster than expected drop in torque in the releasing clutch.

These risks will generally be much less than the risk of engagement vibrations since energy absorbed by the clutch and the heat generated are much greater during engagement. On disengagement, the damping should not become negative because there is no source of energy to create that condition.

The squawk engagements are performed at constant pressure, so it is difficult to discern how important $\partial\mu/\partial P$ might be from squawk test data. The importance of $\partial\mu/\partial P$ on shift quality depends on how the transmission control unit applies the pressure. If the pressure is stepped up suddenly then held constant, as in the squawk test, $\partial\mu/\partial P$ will not be particularly important. If the pressure is ramped up, linearly or exponentially, then $\partial\mu/\partial P$ may also be important. If pressure and sliding speed change together in a predictable way, then, following the same analysis as for temperature, the damping term will include $(\partial\mu/\partial P)(dP/dv)$ so that equation (19) becomes:

$$c_d^* = c_d + AR^2P\left(\frac{\partial\mu}{\partial v} - \frac{\partial\mu}{\partial T}\frac{2\mu P\tau}{\rho c_{ps}L} + \frac{\partial\mu}{\partial P}\frac{dP}{dv}\right) \quad (20)$$

Typically an increase in pressure (positive dP) causes a decrease in sliding speed (dv negative) so that (dP/dv) is negative. Consequently, if $\partial\mu/\partial P$ has any effect, it is beneficial for it to be negative. Squawk pressure versus $\partial\mu/\partial P$

was plotted and a very slight correlation was found between increased squawk pressure (better performance) and negative $\partial\mu/\partial P$. FIG. 20 includes a plot of some of those coefficients. It shows that $\partial\mu/\partial P$ is much less important for squawk performance than $\partial\mu/\partial T$, but that is expected since the pressure is approximately constant.

Plots of squawk pressure versus $\partial\mu/\partial T$ in FIGS. 4-10 show that there is a general trend for $\partial\mu/\partial T$ to decrease in magnitude (converge toward zero) at increasing sliding speeds. In test fluids with negative $\partial\mu/\partial T$ the value of $\partial\mu/\partial T$ was more negative a lower sliding speeds and less negative at higher sliding speeds. Consequently, $\partial\mu/\partial T$ is dependent on sliding speed. This may also be interpreted as temperature dependence since sliding speed and temperature are linearly related (for constant P as in the squawk tests).

Although not desiring to be bound to theory, it is more likely that the reduction in $\partial\mu/\partial T$ (FIGS. 4-10) is temperature dependence for at least two reasons. First, the sliding speeds referred to in the plots are sliding speeds from the SAE#2 test, not clutch engagement sliding speeds from the squawk test. Consequently, the sliding speeds are really indicating the amount of friction work and heating in the SAE #2 test. Second, the values of $\partial\mu/\partial T$ at higher pressure are also reduced in magnitude. Equation (8) says that higher pressure also creates more heat, so the pressure dependence in $\partial\mu/\partial T$ from the SAE #2 data may also be temperature dependence. All the data are consistent with the interpretation that $\partial\mu/\partial T$ decreases in magnitude (becomes less negative) as temperature increases.

The effect of $\partial\mu/\partial T$ decreasing (in magnitude) with increasing temperature is that the contribution of the $\partial\mu/\partial T$ term to the damping in equation (12) decreases during engagement. However, as long as $\partial\mu/\partial T$ remains negative it still contributes to positive damping and improves the smoothness and stability of the shift. Furthermore, since the variation in $\partial\mu/\partial T$ with temperature is linear and predictable, it is easily handled by the transmission control module.

Accordingly, physical and mathematical models are presented herein of the mechanical components in a transmission involved in the shifting of a clutch. The clutch torque is modeled with a coefficient of friction that depends on sliding speed, temperature and pressure: $\mu = \mu(v, T, P)$. A major advance in this model is that the temperature rise in the clutch interface is modeled, which is shown to be proportional to the product $\mu vP$ (heat generation per unit area) and inversely proportional to v (the rate of change of sliding speed) and $\rho c_{ps}L$ (the thermal mass or heat capacity of the steel reaction plate).

The most significant conclusion of the analysis is that it is important for $\partial\mu/\partial T$, a property of the ATF and friction material, to be negative to ensure a smooth, stable shift. It is shown that negative $\partial\mu/\partial T$ increases the damping in the system during engagement and that increased damping reduces the risk of vibration. The equations of motion are solved using several sample sets of data (for illustrative purposes; not based on actual data) and plots show the reduction in vibration with increased damping.

Experimental data, summarized in FIGS. 4-10 also validate several key elements of the model. In particular, with respect to the fluid tested, the data show a strong correlation between improved squawk performance and more negative $\partial\mu/\partial T$. Furthermore, the curve fits of squawk performance to $\partial\mu/\partial T$ show that the contribution of $\partial\mu/\partial T$ to squawk performance (increased damping) is linearly proportional to sliding speed, which is predicted by the model. Sliding speed is the dominant parameter controlling the heat generation and temperature (in $\mu vP$) since P is constant and the changes in $\mu$ are small compared to the changes in v.

The data suggest that $\partial\mu/\partial T$ becomes less negative as the temperature increases (higher P, sliding at constant higher v), so that the contribution of $\partial\mu/\partial T$ to the damping diminishes during the shift. This trend can be tolerated as long as $\partial\mu/\partial T$ does not become positive during engagement.

The model indicates that negative $\partial\mu/\partial T$ has the reverse effect when the clutch releases. It reduces the damping and increases the risk of negative damping. When the clutch releases there is also the likelihood of vibration arising due to unwinding of the shaft as the torque on it is released. Both of these effects can be reduced by allowing the pressure to drop quickly. In that case the $\partial\mu/\partial T$ term in the damping expression goes to zero, so $\partial\mu/\partial T$ does not contribute to negative damping. Also, dropping the pressure takes the shaft out of the driveline so that any transient "unwinding" vibrations are not in the torque path of the power train. This solution is less attractive when there is a control strategy to gradually shift the torque transfer from the releasing to the engaging clutch. In this case the calibration engineer needs to determine the rate of pressure drop in the releasing clutch based on how long the releasing clutch can remain stable.

The present invention recognizes that for shifting clutches the engagement is the critical process, not the release or disengagement. In the case of shifting clutch, the primary heat and pressure increases occur when the clutch is engaging. During disengagement the pressure and "apply" force are dropping so there is much less heat generation. Consequently, lubricants can be specifically formulated with negative values of and $\partial\mu/\partial T$ (and $\partial\mu/\partial P$) in order to suppress noise and vibration during engagement. This runs counter to the conventional wisdom in the lubricant additive industry that seeks to make the lubricant's coefficient of friction, $\mu$, as independent of P and T as possible, which is based on a failure to recognize which process (engagement or release of the clutch) is more critical.

Furthermore, since negative $\partial\mu/\partial T$ make it possible to suppress noise and vibration during clutch engagement, this technology will also allow the formulation of lubricants with higher overall levels of friction ($\mu$), so that the torque capacity of the clutches (and the whole transmission) in increased. Alternatively, higher levels of friction permit transmission calibration engineers to reduce the operating pressure in the transmission without sacrificing the torque capacity,

which improves fuel economy and prolongs the life of lubricant and the mechanical components. Also, higher levels of friction permit smaller transmissions to be used without compromising torque capacity, which also improves fuel economy, weight, and material cost.

Although illustrated herein by way of a shifting clutch, it will be appreciated that the above-indicated inventive methodology of providing negative $\partial\mu/\partial T$, or negative $\partial\mu/\partial P$, condition in a power transmission is applicable to friction torque transfer apparatus in general, including, for example, a shifting clutch, a starting clutch, a torque converter clutch, a band clutch, disk or plate clutch, a limited slip differential clutch, and so forth. The types of power transmission in which the inventive methodology may be applied are not particularly limited, and include, e.g., automatic transmissions, manual transmissions, continuously variable transmissions, and manual automatic transmissions, and so forth. A friction torque apparatus may also operate in different modes, such as continuously slipping, modulating on-off, and engaging from slipping to lock-up, These transmissions may be used in a variety of applications such as automotive, marine, aerospace, industrial, and so forth. In a particular embodiment, the inventive method is applied to a multi-speed automatic transmission, such as a 4-speed or more transmission. In one embodiment, it may be selected from the group consisting of a 5-speed automatic transmission, a 6-speed automatic transmission, and a 7-speed automatic transmission, and particularly 6-speed automatic transmissions. The transmission apparatus also may comprise a dual-clutch transmission or a heavy duty automatic transmission.

In the instance of a shifting clutch as the friction torque transfer apparatus, the clutch may comprise a lining material comprising any suitable wet friction material such as paper, steel, carbon, or elastomeric, etc. Paper friction materials for clutch liners are commercially available. They generally are produced by the steps of making wet paper from a fiber base material of natural pulp fiber, organic synthetic fiber, inorganic fiber, etc. and a filler and friction adjustor such as diatomaceous earth, gum, etc.; impregnating the wet paper with a resin binder of a heat-curable resin; and thermally hardening the wet paper. One observation of the invention is that paper friction materials tend to be harder than carbon fiber friction materials, and that variation in pressure does not influence squawk as significantly as variation in temperature with respect to clutches lined with paper friction materials.

## II. ATF Compositions

In one embodiment, appropriate selection of a transmission fluid formulation for lubricating a shifting clutch or other friction torque transfer apparatus during operation of the transmission apparatus is responsible for providing the condition of a negative $\partial\mu/\partial T$ (or negative $\partial\mu/\partial P$) during engagement of the shifting clutch. That is, additive and fluid compositions have been developed for transmissions to provide high static and quasi-static friction properties while minimizing NVH characteristics such as shift noise, shudder, chatter and squawk. These compositions are also effective at providing the same degree of NVH suppression performance after aging of the fluid.

Although the additive composition components described below are described occasionally with reference to a function, that function may be one of other functions served by the same component and should not be construed as a mandatory limiting function.

### A. Additive Package I for Enhanced anti-NVH Performance:

In one embodiment, an anti-NVH performance-improving additive package comprises four critical components: alkoxylated amine friction modifier, dihydrocarbylphosphite friction modifier, metallic detergent, and phosphorylated succinimide ashless dispersant.

Experimental studies were conducted, which are summarized in more detail in the Examples section herein, which revealed that these four components of an automatic transmission fluid are primarily responsible for influencing the $\partial\mu/\partial T$ (and $\partial\mu/\partial P$) values observed. In particular, properly balanced combinations of these four particular components have been discovered to have the unexpected combined effect of bringing about the negative $\partial\mu/\partial T$ slope condition during engaging, slipping or modulating of a friction torque transfer apparatus of the transmission apparatus, which condition surprisingly has been found to provide NVH suppression without quasi-static or static friction losses of significance. Indeed, it has been observed that providing even relatively small negative $\partial\mu/\partial T$ values yield very significant improvements in anti-NVH. Although higher magnitude negative $\partial\mu/\partial T$ values also may provide some additional incremental improvements in anti-NVH, the most significant gains in NVH suppression generally can be attained at relatively small negative $\partial\mu/\partial T$ conditions. The respective amounts of these four components needed to attain the negative $\partial\mu/\partial T$ slope condition generally are governed by the experimental discovery and observation that the presence of alkoxylated amine, dihydrocarbyl phosphite, and metallic detergent independently increase the negative value of $\partial\mu/\partial T$, i.e., make it more negative, while a decreasing level thereof has the opposite effect on $\partial\mu/\partial T$, i.e., makes it less negative (i.e., a negative value of smaller absolute magnitude or a positive-value). On the other hand, increasing amounts of the phosphorylated succinimide component make $\partial\mu/\partial T$ less negative, while decreasing amounts have the opposite effect. Levels of these four components must be balanced with above criteria in mind to introduce a negative $\partial\mu/\partial T$ condition, preferably

a small negative $\partial\mu/\partial T$ condition for improving anti-NVH performance, among other things. Lesser included combinations of these four components will not behave reliably in the above indicated manner.

**Component (A): Friction Modifier (1)**

Component (A) comprises an alkoxylated amine friction modifier which is used in the additive package and transmission fluids of the present invention. Increasing the level of this component in the transmission fluid has been found to make $\partial\mu/\partial T$ more negative, and decreasing its level has the opposite effect.
The alkoxylated amines which may be utilized in the practice of this invention are preferably primary aliphatic amines that have been ethoxylated or propoxylated. The resultant product is thus an N,N-bis(hydroxyalkyl)-N-aliphatic amine in which the aliphatic group is preferably an alkyl or alkenyl group containing from 10 to 22 carbon atoms, most preferably an alkyl or alkenyl group containing from 16 to 18 carbon atoms. N,N-bis(hydroxyethyl)-N-tallow amine is especially preferred. Examples of suitable alkoxylated amine friction modifiers are described, for example, in U.S. Pat. No. 4,855,074, which descriptions are incorporated herein by reference.
The alkoxylated amine compounds of the invention should be used at a concentration of about 0.002 wt% to about 0.5 wt%,, particularly about 0.01 wt% to about 0.25 wt%, to insure that the finished blend contains an adequate quantity of the foregoing ingredient although smaller amounts may be successfully employed, depending on the relative amounts of components (B), (C) and (D).

**Component (B): Friction Modifier (2)**

Dihydrocarbylphosphites are used as an additional friction modifier in the additive package and transmission fluids of the present invention. Increasing the level of this component in the transmission fluid has been found to make $\partial\mu/\partial T$ more negative, and decreasing its level has the opposite effect.
As used herein "hydrocarbyl" is an alkyl, alkaryl, aralkyl, alkenyl, cycloalkyl or cycloalkenyl group. Dihydrocarbylphosphites usable in this invention include phosphite derivatives such as dialkylphosphites, dicycloalkylphosphites, diallyl phosphites, diarylphosphites, diaralkylphosphites, monoalkylmonoarylphosphites, and the like. Illustrative compounds of this type include dimethylphosphite, diethylphosphite, dipropyl phosphite, dibutylphosphite, dioctylphosphite, dicyclohexylphosphite, diphenylphosphite, dioleyl phosphite, methyl oleyl phosphate, butyl lauryl phosphate, ethyl hexyl phosphate, napthyl oleyl phosphite, dibenzylphosphite, phenylneopentylphosphite, diamyl phosphate, dihexyl phosphate, diheptyl phosphate, di-2-ethylhexyl phosphate, diisoctyl phosphate, didecyl phosphate, dilauryl phosphate, didecenyl phosphate, didodecenyl phosphate, distearyl phosphate, dieicosyl phosphate, dicresyl phosphate, dicyclohexenyl phosphate, and dinonylphenyl phosphite and any combinations of the above. Examples of suitable dihydrocarbyl phosphite friction modifiers are described, for example, in U.S. Pat. No. 4,855,074, and 4,588,415, which descriptions of dihydrocarbyl phosphite friction modifiers are incorporated herein by reference.
The dihydrocarbyl phosphite compounds of the invention should be used at a concentration of about 0.001 wt% to about 0.5 wt%, particularly about 0.01 wt% to about 0.2 wt%, to insure that the finished blend contains an adequate quantity of the foregoing ingredient although smaller amounts may be successfully employed, depending on the relative amounts of components (A), (C) and (D).

**Component (C): Metallic Detergent**

A metallic detergent is included in the additive package and transmission fluids of the present invention. Increasing the level of this detergent component in the transmission fluid has been found to make $\partial\mu/\partial T$ more negative, and decreasing its level has the opposite effect.
A suitable metallic detergent may include an oil-soluble neutral or overbased salt of alkali or alkaline earth metal with one or more of the following acidic substances (or mixtures thereof): (1) a sulfonic acid, (2) a carboxylic acid, (3) a salicylic acid, (4) an alkyl phenol, (5) a sulfurized alkyl phenol, and (6) an organic phosphorus acid characterized by at least one direct carbon-to-phosphorus linkage. Such an organic phosphorus acid may include those prepared by the treatment of an olefin polymer (e.g., polyisobutylene having a molecular weight of about 1,000) with a phosphorizing agent such as phosphorus trichloride, phosphorus heptasulfide, phosphorus pentasulfide, phosphorus trichloride and sulfur, white phosphorus and a sulfur halide, or phosphorothioic chloride.
Suitable salts may include neutral or overbased salts of magnesium, calcium, or zinc. As a further example, suitable salts may include magnesium sulfonate, calcium sulfonate, zinc sulfonate, magnesium phenate, calcium phenate, and/or zinc phenate. See, e.g., U.S. Pat. Nos. 6,482,778 and 5,578,235, which descriptions of suitable salts are incorporated herein by reference.
Oil-soluble neutral metal-containing detergents are those detergents that contain stoichiometrically equivalent amounts of metal in relation to the amount of acidic moieties present in the detergent. Thus, in general the neutral

detergents will have a low basicity when compared to their overbased counterparts. The acidic materials utilized in forming such detergents include carboxylic acids, salicylic acids, alkylphenols, sulfonic acids, sulfurized alkylphenols and the like.

The term "overbased" in connection with metallic detergents is used to designate metal salts wherein the metal is present in stoichiometrically larger amounts than the organic radical. The commonly employed methods for preparing the overbased salts involve heating a mineral oil solution of an acid with a stoichiometric excess of a metal neutralizing agent such as the metal oxide, hydroxide, carbonate, bicarbonate, or sulfide at a temperature of about 50˚C, and filtering the resultant product. The use of a "promoter" in the neutralization step to aid the incorporation of a large excess of metal likewise is known. Examples of compounds useful as the promoter include phenolic substances such as phenol, naphthol, alkyl phenol, thiophenol, sulfurized alkylphenol, and condensation products of formaldehyde with a phenolic substance; alcohols such as methanol, 2-propanol, octanol, ethylene glycol, stearyl alcohol, and cyclohexyl alcohol; and amines such as aniline, phenylene diamine, phenothiazine, phenyl-beta-naphthylamine, and dodecylamine. A particularly effective method for preparing the basic salts comprises mixing an acid with an excess of a basic alkaline earth metal neutralizing agent and at least one alcohol promoter, and carbonating the mixture at an elevated temperature such as 60˚C to 200˚C.

Examples of suitable metal-containing detergents include, but are not limited to, neutral and overbased salts such as a sodium sulfonate, a sodium carboxylate, a sodium salicylate, a sodium phenate, a sulfurized sodium phenate, a lithium sulfonate, a lithium carboxylate, a lithium salicylate, a lithium phenate, a sulfurized lithium phenate, a magnesium sulfonate, a magnesium carboxylate, a magnesium salicylate, a magnesium phenate, a sulfurized magnesium phenate, a calcium sulfonate, a calcium carboxylate, a calcium salicylate, a calcium phenate, a sulfurized calcium phenate, a potassium sulfonate, a potassium carboxylate, a potassium salicylate, a potassium phenate, a sulfurized potassium phenate, a zinc sulfonate, a zinc carboxylate, a zinc salicylate, a zinc phenate, and a sulfurized zinc phenate. Further examples include a lithium, sodium, potassium, calcium, and magnesium salt of a hydrolyzed phosphosulfurized olefin having about 10 to about 2,000 carbon atoms or of a hydrolyzed phosphosulfurized alcohol and/or an aliphatic-substituted phenolic compound having about 10 to about 2,000 carbon atoms. Even further examples include lithium, sodium, potassium, calcium, and magnesium salts of an aliphatic carboxylic acid and an aliphatic substituted cycloaliphatic carboxylic acid and many other similar alkali and alkaline earth metal salts of oil-soluble organic acids. A mixture of a neutral or an overbased salt of two or more different alkali and/or alkaline earth metals can be used. Likewise, a neutral and/or an overbased salt of mixtures of two or more different acids can also be used.

As is well known, overbased metal detergents are generally regarded as containing overbasing quantities of inorganic bases, generally in the form of micro dispersions or colloidal suspensions. Thus the term "oil-soluble" as applied to metallic detergents is intended to include metal detergents wherein inorganic bases are present that are not necessarily completely or truly oil-soluble in the strict sense of the term, inasmuch as such detergents when mixed into base oils behave much the same way as if they were fully and totally dissolved in the oil. Collectively, the various metallic detergents referred to herein above, are sometimes called neutral, basic, or overbased alkali metal or alkaline earth metal-containing organic acid salts.

Methods for the production of oil-soluble neutral and overbased metallic detergents and alkaline earth metal-containing detergents are well known to those skilled in the art, and extensively reported in the patent literature. See, for example, U.S. Pat. Nos. 4,647,387 and 4,880,550, which descriptions of methods for production of metallic detergents are incorporated herein by reference.

The metallic detergents utilized in this invention can, if desired, be oil-soluble boronated neutral and/or overbased alkali of alkaline earth metal-containing detergents. Methods for preparing boronated metallic detergents are described in, for example, U.S. Pat. Nos. 4,965,003 and 4,965,004, which descriptions of metallic detergents are incorporated herein by reference.

The metallic detergent compounds of the invention should be used at a concentration of about 0.01 wt% to about 1.0 wt%, particularly about 0.01 wt% to about 0.7 wt%, to insure that the finished blend contains an adequate quantity of the foregoing ingredient although smaller amounts may be successfully employed, depending on the relative amounts of components (A), (B) and (D).

## <u>Component (D): Dispersant</u>

Component (D) comprises phosphorylated succinimide ashless dispersant which is included in the additive package and transmission fluids of the present invention. Increasing the level of this component in the transmission fluid makes $\partial\mu/\partial T$ less negative, and decreasing its level has the opposite effect.

Examples of suitable dispersants are described, for example, in U.S. Pat. Nos. 6,627,584 and 4,857,214, which descriptions of suitable dispersants are incorporated herein by reference. These dispersants are formed by phosphorylating an ashless dispersant having basic nitrogen and/or at least one hydroxyl group in the molecule, and preferably a succinimide dispersant. As used herein the term "succinimide" is meant to encompass the completed reaction product

from reaction between one or more polyamine reactants and a hydrocarbon-substituted succinic acid or anhydride (or like succinic acylating agent), and is intended to encompass compounds wherein the product may have amide, amidine, and/or salt linkages in addition to the imide linkage of the type that results from the reaction of a primary amino group and an anhydride moiety.

The succinimide includes, for example, polyamine succinimides in which the succinic group contains a hydrocarbyl substituent containing at least 30 carbon atoms are described for example in U.S. Pat. Nos. 3,172,892; 3,202,678; 3,216,936; 3,219,666; 3,254,025; 3,272,746; and 4,234,435, which descriptions of polyamine succinimides are incorporated herein by reference. Also included are alkenyl succinimides, which may be formed by conventional methods such as by heating an alkenyl succinic anhydride, acid, acid-ester, acid halide, or lower alkyl ester with a polyamine containing at least one primary amino group. The alkenyl succinic anhydride may be made readily by heating a mixture of olefin and maleic anhydride to, for example, about 180-220°C. The olefm is preferably a polymer or copolymer of a lower monoolefin such as ethylene, propylene, 1-butene, isobutene and the like and mixtures thereof. The more preferred source of alkenyl group is from polyisobutene having a gel permeation chromotography (GPC) number average molecular weight of up to 10,000 or higher, preferably in the range of about 500 to about 2,500, and most preferably in the range of about 800 to about 1,500.

Preferred procedures for phosphorylating ashless dispersants include, for example, those described in U.S. Pat. Nos. 6,627,584, 4,857,214, and 5,198,133, which descriptions of procedures for phosphorylating ashless dispersants are incorporated herein by reference.

The amount of ashless dispersant on an "active ingredient basis" (i.e., excluding the weight of impurities, diluents and solvents typically associated therewith) is generally within the range of about 0.5 to about 7.5 weight percent (wt %), typically within the range of about 0.5 to 6.5 wt %, preferably within the range of about 0.5 to about 5.5 wt %, and most preferably within the range of about 1.0 to about 4.5 wt %.

In a preferred embodiment, this dispersant component of the present invention is a dispersant having a nitrogen to phosphorus mass ratio between about 3:1 1 and about 10:1. The ashless dispersant of a preferred embodiment can be prepared by phosphorylating the succinimide compound to such a degree that the resulting nitrogen to phosphorus mass ratio in the reaction product is between about 3:1 and about 10:1. In another embodiment, a phosphorylated dispersant and a non-phosphorylated dispersant are blended together such that the total nitrogen to phosphorus mass ratio of the dispersant is between about 3:1 1 and about 10:1.

The phosphorylated succinimide dispersant compounds of the invention may be used at a concentration of about 0.01 wt% to about 12 wt%,, particularly about 0.01 wt% to about 10 wt%, to insure that the finished blend contains an adequate quantity of the foregoing ingredient although smaller amounts may be successfully employed, depending on the relative amounts of components (A), (B) and (C), and alternatively, larger amounts also may be used so long as the relative amounts of components (A), (B) and (C) are sufficient to keep $\partial\mu/\partial T$ negative.

## Combined Use of Components (A), (B), (C) and (D)

Anti-NVH characteristics are improved for a power transmission fluid which is formulated to predominantly contain base oil, and a minor amount of an additive composition containing 0.002-0.5 wt% alkoxylated amine (Component (A)), 0.001-0.5 wt% dihydrocarbyl phosphite (Component (B)), 0.01-1.0 wt% metallic detergent (Component (C)), and 0.01-12 wt% phosphorylated succinimide (Component (D)). Particularly, the fluid composition may contain about 0.01-0.2 wt% Component (A); 0.01-0.7 wt% Component (B); 0.01-10 wt% Component (C); and 0.01-10 wt% Component (D). Components (A), (B), (C) and (D) may be introduced into a fluid composition comprising a major amount of base oil either as an additive concentrate, individually, etc. An additive concentrate containing these components may be incorporated into a finished composition at a treat rate of about 3 wt% to about 20, particularly about 5 wt% to about 15 wt%, based on the overall fluid composition.

The combined presence of these four components in properly balanced proportions is necessary to achieve the negative the $\partial\mu/\partial T$ slope condition associated with achieving improved anti-NVH characteristics. In one embodiment, a fluid composition containing all four Components (A)-(D) is formulated such that the fluid composition such that the fluid composition comprises a viscosity at 100°C of < 6 cSt, a viscosity at 40°C of <30 cSt, and a Brookfield Viscosity at -40°C of <10,000 cP, and wherein the $\partial\mu/\partial T$ slope value is determined from coefficient of friction and temperature measurements taken on a low speed SAE #2 Machine using a paper friction material lined clutch plate and testing conditions of 0.79 $N/mm^2$, >50 rpm, and at 40°C and 120°C. The paper friction material lining material used in the testing machines may be a commercial product made/supplied by Borg Warner Automotive as Borg Warner 4329. A power transmission fluid including only one, two or three of components (A)-(D), but not all, or not in balanced proportions, can not predictably and reliably provide a transmission fluid having a negative $\partial\mu/\partial T$.

**B. Additive Package II for Enhanced anti-NVH Durability Performance**

Six components, inclusive of the above four-discussed Components (A)-(D) and two additional surfactant compounds, Compounds (E) and (F) described in more detail below, of an automatic transmission fluid, can additionally be used for maintaining more stable anti-NVH durability of the fluid as it ages over a service life.

**Component (E): Tertiary Fatty Amine**

Component (E) comprises a tertiary fatty amine surfactant/friction modifier which is included in the additive package and transmission fluids of the present invention. The co-presence of this component and Component (F) described below, in a composition containing Components (A)-(D) has been found to help maintain desired friction properties as the fluid ages over a service life.

The tertiary fatty amine may be represented by the following formula:

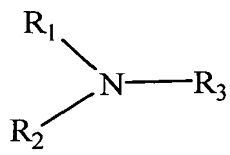

wherein $R_1$ and $R_2$ can independently represent $C_1$ to $C_6$, and $R_3$ may represent a $C_{10}$ to $C_{26}$ alkyl or alkenyl group. Preferred tertiary fatty amines are selected with $R_3$ representing dialkyl $C_{16}$ -$C_{22}$ alkylamines in which the fatty alkyl chains. Suitable tertiary fatty amines include, for example: dimethyl decylamine, dimethyl laurylamine, dimethyl myristylamine, dimethyl cetylamine, dimethyl stearylamine, dimethyl arachadylamine, dimethyl behenylamine, dimethyl cocoylamine, and dimethyl tallowylamine, or combinations thereof. In one preferred embodiment, the long chain tertiary amine comprises dimethyl stearyl-amine (N,N-dimethyl 1-octadecamine) which is represented by the formula $C_{18}$ $H_{37}N$ $(CH_3)_2$.

The tertiary fatty amine compounds of the invention should be used at a concentration of 0.005 wt% to about 1.0 wt%, particularly about 0.01 wt% to about 0.7 wt%, to insure that the finished blend contains an adequate quantity of the foregoing ingredient for anti-NVH durability enhancements although smaller amounts may be successfully employed, depending on the relative amounts of components (A)-(D), and (E).

**Component (F): Alkoxylated Alcohol**

Component (F) comprises an alkoxylated alcohol non-ionic surfactant which is included in the additive package and transmission fluids of the present invention. The level of this component in the transmission fluid must be sufficient to maintain friction properties as the fluid ages over a service life.

Alkoxylated alcohols which can be used in forming the additives of this invention include, for example, oil-soluble alkoxylated alkanols, alkoxylated cycloalkanols, alkoxylated polyols, alkoxylated phenols, and alkoxylated heterocyclic alcohols which contain an average of up to about 20 alkoxy groups per molecule. The alkoxy groups can be methoxy, ethoxy, propoxy, butoxy, or pentoxy, or combinations of two or more of these. However ethoxy-substituted alcohols are preferred. The alkoxylated alcohol should be a liquid at ambient temperatures in the range of 20-25°C. Since the alkoxylated alcohol should be oil-soluble, short chain alcohols preferably contain an average of at least two alkoxy groups per molecule whereas longer chain alcohols may contain one or more alkoxy groups per molecule. The average number of alkoxy groups in any given alcohol can be as high as 15 or 20 as long as the product is oil soluble and is preferably a liquid at room temperature. Examples of alcohols that form suitable alkoxylated alcohols include $C_{1-24}$ alkanols, $C_{1-10}$ cycloalkanols, polyols having up to about 16 carbon atoms and 2-5 hydroxyl groups, polyol ethers having up to about 16 carbon atoms and at least one hydroxyl group, phenol, alkylphenols having up to about 16 carbon atoms, and hydroxy-substituted heterocyclic compounds such as tetrahydrofurfuryl alcohol and tetrahydropyran-2-methanol.

Preferred is an alkoxylated alcohol of 8 to 16 carbon atoms or mixture of two or more of such alcohols having an average of 1 to 10 ethoxy groups per molecule. Particularly preferred are ethoxylated alcohols, such as an ethoxylated $C_{10-14}$ alcohol having an average of 1 to 3 ethoxy groups per molecule.

The alkoxylated alcohol compounds of the invention should be used at a concentration of 0.01 wt% to about 0.7 wt%, particularly about 0.01 wt% to about 0.5 wt%, to insure that the finished blend contains an adequate quantity

of the foregoing ingredient for anti-NVH durability enhancements although smaller amounts may be successfully employed, depending on the relative amounts of components (A)-(E).

**Combined Use of Components (A) -(F)**

Anti-NVH durability characteristics are improved for a power transmission fluid which is formulated to predominantly contain base oil, and a minor amount of an additive composition containing 0.002-0.5 wt% alkoxylated amine (Component (A)), 0.001-0.5 wt% dihydrocarbyl phosphite (Component (B)), 0.01-1.0 wt% metallic detergent (Component (C)), 0.01-12 wt% phosphorylated succinimide (Component (D)), 0.005-1.0 wt% long chain tertiary amine (Component (E)), and 0.01-0.7 ethoxylated alcohol (Component (F)). Particularly, the fluid composition may contain about 0.01-25 wt% Component (A); 0.01-0.2 wt% Component (B); 0.01-0.7 wt% Component (C); 0.01-10 wt% Component (D); 0.01-0.7 wt% Component (E); and 0.01-0.5 wt% Component (F). Components (A), (B), (C), (D), (E) and (F) may be introduced into a fluid composition comprising a major amount of base oil either as an additive concentrate, individually, etc. An additive concentrate containing these components may be incorporated into a finished composition at a treat rate of about 3 wt% to about 20, particularly about 5 wt% to about 15 wt%, based on the overall fluid composition.

The combined presence of these six components is necessary to achieve more stable and uniform friction interactions between the fluid and clutch plate as the fluid ages. In one embodiment, a fluid composition containing all six Components (A)-(F) is formulated such that the fluid composition comprises a viscosity at 100˚C of < 6 cSt, a viscosity at 40˚C of <30 cSt, and a Brookfield Viscosity at -40˚C of <10,000 cP, and wherein the the fluid has a variation in coefficient of friction at testing rpm ranging from 50 to 300 of less than about 0.015 (absolute value) as determined from measurements taken on an SAE #2 Machine using a test plate comprising a paper friction material lined clutch plate and testing conditions ranging from about 0.3 to about 3.4 $N/mm^2$, such as 0.79 $N/mm^2$ at 150˚C for 200 hours. In another embodiment, the fluid further has quasi-static friction greater than 0.098 and static friction of 0.123 or greater, as measured on a ZF GK rig. In another embodiment, the fluid has an anti-NVH characteristic having a threshold pressure value greater in value than 0.8 $N/mm^2$ as measured on a ZF GK rig. In another embodiment, the fluid has an NVH characteristic which, after exposure to oxidizing conditions, does not decrease in value below the initial value of the NVH characteristic value before the exposure as measured on a ZF GK rig. In yet another embodiment, the fluid has an NVH characteristic which, after exposure to oxidizing conditions, does not decrease to a value below the initial value of the NVH characteristic before exposure as measured on the ZF GK rig. The "NVH characteristic" refers to noise phenomena, such as squawk, chatter, shudder, and/or noise. In one non-limiting embodiment, the NVH characteristic is squawk.

A power transmission fluid including less than all six of components (A)-(F) can not predictably and reliably maintain such uniform and stable friction properties at the clutch, e.g., greater variation in the coefficient of friction parameter may be observed.

**Other Optional Additive Components**

The fluids of the present embodiments may also optionally include conventional additives of the type used in power transmission fluid formulations and gear lubricants in addition to the extreme pressure and antiwear performance improving co-additives described above. Such additives include, but are not limited to, metallic detergents, dispersants, friction modifiers, antioxidants, viscosity index improvers, copper corrosion inhibitors, anti-rust additives, antiwear additives, antifoamants, pour point depressants, seal swell agents, colorants, metal deactivators, and/or air expulsion additives. It will be appreciated that various required and optional additives described herein may have additional other advantageous effects in the finished fluids.

**Component (G): Supplemental Dispersants**

Component (G) comprises at least one oil-soluble supplemental dispersant. Suitable dispersants may include ashless dispersants such as succinic dispersants, Mannich base dispersants, and polymeric polyamine dispersants. Hydrocarbyl-substituted succinic acylating agents are used to make hydrocarbyl-substituted succinimides. The hydrocarbyl-substituted succinic acylating agents include, but are not limited to, hydrocarbyl-substituted succinic acids, hydrocarbyl-substituted succinic anhydrides, the hydrocarbyl-substituted succinic acid halides (especially the acid fluorides and acid chlorides), and the esters of the hydrocarbyl-substituted succinic acids and lower alcohols (e.g., those containing up to 7 carbon atoms), that is, hydrocarbyl-substituted compounds which can function as carboxylic acylating agents.

Hydrocarbyl substituted acylating agents are made by reacting a polyalkyl olefin or chlorinated polyalkyl olefin of appropriate molecular weight with maleic anhydride. Similar carboxylic reactants can be used to make the acylating agents. Such reactants may include, but are not limited to, maleic acid, fumaric acid, malic acid, tartaric acid, itaconic acid, itaconic anhydride, citraconic acid, citraconic anhydride, mesaconic acid, ethylmaleic anhydride, dimethylmaleic

anhydride, ethylmaleic acid, dimethylmaleic acid, hexylmaleic acid, and the like, including the corresponding acid halides and lower aliphatic esters.

The molecular weight of the olefin can vary depending upon the intended use of the substituted succinic anhydrides. Typically, the substituted succinic anhydrides will have a hydrocarbyl group of from about 8 to about 500 carbon atoms. However, substituted succinic anhydrides used to make lubricating oil dispersants will typically have a hydrocarbyl group of about 40 to about 500 carbon atoms. With high molecular weight substituted succinic anhydrides, it is more accurate to refer to number average molecular weight (Mn) since the olefins used to make these substituted succinic anhydrides may include a mixture of different molecular weight components resulting from the polymerization of low molecular weight olefin monomers such as ethylene, propylene, and isobutylene.

The mole ratio of maleic anhydride to olefin can vary widely. It may vary, for example, from about 5:1 1 to about 1:5, or for example, from about 1:1 to about 3:1. With olefins such as polyisobutylene having a number average molecular weight of about 500 to about 7000, or as a further example, about 800 to about 3000 or higher and the ethylene-alpha-olefin copolymers, the maleic anhydride may be used in stoichiometric excess, e.g. about 1.1 to about 3 moles maleic anhydride per mole of olefin. The unreacted maleic anhydride can be vaporized from the resultant reaction mixture.

The polyalkyl or polyalkenyl substituent on the succinic anhydrides employed herein is generally derived from polyolefins, which are polymers or copolymers of mono-olefins, particularly 1-mono-olefins, such as ethylene, propylene, and butylene. The mono-olefin employed may have about 2 to about 24 carbon atoms, or as a further example, about 3 to about 12 carbon atoms. Other suitable mono-olefins include propylene, butylene, particularly isobutylene, 1-octene, and 1-decene. Polyolefins prepared from such mono-olefins include polypropylene, polybutene, polyisobutene, and the polyalphaolefins produced from 1-octene and 1-decene.

Polyalkenyl succinic anhydrides may be converted to polyalkyl succinic anhydrides by using conventional reducing conditions such as catalytic hydrogenation. For catalytic hydrogenation, a suitable catalyst is palladium on carbon. Likewise, polyalkenyl succinimides may be converted to polyalkyl succinimides using similar reducing conditions.

In some embodiments, the ashless dispersant may include one or more alkenyl succinimides of an amine having at least one primary amino group capable of forming an imide group. The alkenyl succinimides may be formed by conventional methods such as by heating an alkenyl succinic anhydride, acid, acid-ester, acid halide, or lower alkyl ester with an amine containing at least one primary amino group. The alkenyl succinic anhydride may be made readily by heating a mixture of polyolefin and maleic anhydride to about 180˚-220˚C. The polyolefin may be a polymer or copolymer of a lower monoolefin such as ethylene, propylene, isobutene and the like, having a number average molecular weight in the range of about 300 to about 3000 as determined by gel permeation chromatography (GPC).

Amines which may be employed in forming the ashless dispersant include any that have at least one primary amino group which can react to form an imide group and at least one additional primary or secondary amino group and/or at least one hydroxyl group. A few representative examples are: N-methyl-propanediamine, N-dodecylpropanediamine, N-aminopropyl-piperazine, ethanolamine, N-ethanol-ethylenediamine, and the like.

Suitable amines may include polyalkylene polyamines, such as propylene diamine, dipropylene triamine, di-(1,2-butylene)triamine, and tetra-(1,2-propylene)pentamine. A further example includes the polyethylene polyamines which can be depicted by the formula $H_2N(CH_2CH_2NH)_nH$, wherein n may be an integer from about one to about ten. These include: ethylene diamine, diethylene triamine (DETA), triethylene tetramine (TETA), tetraethylene pentamine (TEPA), pentaethylene hexamine (PEHA), and the like, including mixtures thereof in which case n is the average value of the mixture. Such polyethylene polyamines have a primary amine group at each end so they may form mono-alkenylsuccinimides and bis-alkenylsuccinimides. Commercially available polyethylene polyamine mixtures may contain minor amounts of branched species and cyclic species such as N-aminoethyl piperazine, N,N'-bis(aminoethyl) piperazine, N, N'-bis(piperazinyl)ethane, and like compounds. The commercial mixtures may have approximate overall compositions falling in the range corresponding to diethylene triamine to tetraethylene pentamine. The molar ratio of polyalkenyl succinic anhydride to polyalkylene polyamines may be from about 1:1 to about 3.0:1.

In some embodiments, the ashless dispersant may include the products of the reaction of a polyethylene polyamine, e.g. triethylene tetramine or tetraethylene pentamine, with a hydrocarbon substituted carboxylic acid or anhydride made by reaction of a polyolefin, such as polyisobutene, of suitable molecular weight, with an unsaturated polycarboxylic acid or anhydride, e.g., maleic anhydride, maleic acid, fumaric acid, or the like, including mixtures of two or more such substances.

Polyamines that are also suitable in preparing the dispersants described herein include N-arylphenylenediamines, such as N-phenylphenylenediamines, for example, N-phenyl-1,4-phenylenediamine, N-phenyl-1,3-phenylenediamine, and N-phenyl-1,2-phenylenediamine; aminothiazoles such as aminothiazole, aminobenzothiazole, aminobenzothiadiazole, and aminoalkylthiazole; aminocarbazoles; aminoindoles; aminopyrroles; amino-indazolinones; aminomercaptotriazoles; aminoperimidines; aminoalkyl imidazoles, such as 1-(2-aminoethyl) imidazole, 1-(3-aminopropyl) imidazole; and aminoalkyl morpholines, such as 4-(3-aminopropyl) morpholine. These polyamines are described in more detail in U.S. Pat. Nos. 4,863,623 and 5,075,383. Such polyamines can provide additional benefits, such as anti-wear and antioxidancy, to the final products.

Additional polyamines useful in forming the hydrocarbyl-substituted succinimides include polyamines having at least one primary or secondary amino group and at least one tertiary amino group in the molecule as taught in U.S. Pat. Nos. 5,634,951 and 5,725,612. Examples of suitable polyamines include N,N,N",N"-tetraalkyldialkylenetriamines (two terminal tertiary amino groups and one central secondary amino group), N,N,N',N"-tetraalkyltrialkylenetetramines (one terminal tertiary amino group, two internal tertiary amino groups and one terminal primary amino group), N,N,N', N",N"'-pentaalkyltrialkylenetetramines (one terminal tertiary amino group, two internal tertiary amino groups and one terminal secondary amino group), tris(dialkylaminoalkyl)-aminoalkylmethanes (three terminal tertiary amino groups and one terminal primary amino group), and like compounds, wherein the alkyl groups are the same or different and typically contain no more than about 12 carbon atoms each, and which may contain from about 1 to about 4 carbon atoms each. As a further example, these alkyl groups may be methyl and/or ethyl groups. Polyamine reactants of this type may include dimethylaminopropylamine (DMAPA) and N-methyl piperazine.

Hydroxyamines suitable for herein include compounds, oligomers or polymers containing at least one primary or secondary amine capable of reacting with the hydrocarbyl-substituted succinic acid or anhydride. Examples of hydroxyamines suitable for use herein include aminoethylethanolamine (AEEA), aminopropyldiethanolamine (APDEA), ethanolamine, diethanolamine (DEA), partially propoxylated hexamethylene diamine (for example HMDA-2PO or HMDA-3PO), 3-amino-1,2-propanediol, tris(hydroxymethyl)aminomethane, and 2-amino-1,3-propanediol.

The mole ratio of amine to hydrocarbyl-substituted succinic acid or anhydride may range from about 1:1 to about 3.0:1. Another example of a mole ratio of amine to hydrocarbyl-substituted succinic acid or anhydride may range from about 1.5:1 to about 2.0:1.

The foregoing dispersant may also be a post-treated dispersant made, for example, by treating the dispersant with maleic anhydride and boric acid as described, for example, in U.S. Patent No. 5,789,353, or by treating the dispersant with nonylphenol, formaldehyde and glycolic acid as described, for example, in U.S. Patent No. 5,137,980.

The Mannich base dispersants may be a reaction product of an alkyl phenol, typically having a long chain alkyl substituent on the ring, with one or more aliphatic aldehydes containing from about 1 to about 7 carbon atoms (especially formaldehyde and derivatives thereof), and polyamines (especially polyalkylene polyamines). For example, a Mannich base ashless dispersants may be formed by condensing about one molar proportion of long chain hydrocarbon-substituted phenol with from about 1 to about 2.5 moles of formaldehyde and from about 0.5 to about 2 moles of polyalkylene polyamine.

Hydrocarbon sources for preparation of the Mannich polyamine dispersants may be those derived from substantially saturated petroleum fractions and olefin polymers, such as polymers of mono-olefins having from about 2 to about 6 carbon atoms. The hydrocarbon source generally contains, for example, at least about 40 carbon atoms, and as a further example, at least about 50 carbon atoms to provide substantial oil solubility to the dispersant. The olefin polymers having a GPC number average molecular weight between about 600 and about 5,000 are suitable for reasons of easy reactivity and low cost. However, polymers of higher molecular weight can also be used. Especially suitable hydrocarbon sources are isobutylene polymers and polymers made from a mixture of isobutene and a raffinate I stream.

Suitable Mannich base dispersants may be Mannich base ashless dispersants formed by condensing about one molar proportion of long chain hydrocarbon-substituted phenol with from about 1 to about 2.5 moles of formaldehyde and from about 0.5 to about 2 moles of polyalkylene polyamine.

Polymeric polyamine dispersants suitable as the ashless dispersants are polymers containing basic amine groups and oil solubilizing groups (for example, pendant alkyl groups having at least about 8 carbon atoms). Such materials are illustrated by interpolymers formed from various monomers such as decyl methacrylate, vinyl decyl ether or relatively high molecular weight olefins, with aminoalkyl acrylates and aminoalkyl acrylamides. Examples of polymeric polyamine dispersants are set forth, for example, in U.S. Pat. Nos. 3,687,849 and 3,702,300. Polymeric polyamines may include hydrocarbyl polyamines wherein the hydrocarbyl group is composed of the polymerization product of isobutene and a raffinate I stream as described above. PIB-amines and PIB-polyamines may also be used.

Methods for the production of ashless dispersants as described above are known to those skilled in the art and are reported in the patent literature. For example, the synthesis of various ashless dispersants of the foregoing types is described in such patents as U.S. Patent Nos. 5,137,980 and Re 26,433, herein incorporated by reference.

An example of a suitable ashless dispersant is a borated dispersant. Borated dispersants may be formed by boronating (borating) an ashless dispersant having basic nitrogen and/or at least one hydroxyl group in the molecule, such as a succinimide dispersant, succinamide dispersant, succinic ester dispersant, succinic ester-amide dispersant, Mannich base dispersant, or hydrocarbyl amine or polyamine dispersant.

Methods that can be used for boronating the various types of ashless dispersants described above are described, for example, in U.S. Pat. Nos. 4,455,243 and 4,652,387.

The borated dispersant may include a high molecular weight dispersant treated with boron such that the borated dispersant includes up to about 2 wt% of boron. As another example the borated dispersant may include from about 0.8 wt% or less of boron. As a further example, the borated dispersant may include from about 0.1 to about 0.7 wt% of boron. As an even further example, the borated dispersant may include from about 0.25 to about 0.7 wt% of boron. As

a further example, the borated dispersant may include from about 0.35 to about 0.7 wt% of boron. The borated dispersant may further include a mixture of borated dispersants. As a further example, the borated dispersant may include a nitrogen-containing dispersant and/or may be free of phosphorus. As an additional example, the borated dispersant may include phosphorus. The dispersant may be dissolved in oil of suitable viscosity for ease of handling. It should be understood that the weight percentages given here are for neat dispersant, without any diluent oil added.

A dispersant may be further reacted with an organic acid, an anhydride, and/or an aldehyde/phenol mixture. Such a process may enhance compatibility with elastomer seals, for example.

A dispersant may be present in the power transmission fluid in an amount of up to about 15 wt%. Further, the fluid composition may include from about 0.1 wt% to about 10 wt% of the borated dispersant. Further, the fluid composition may include from about 3 wt% to about 5 wt% of the borated dispersant. Further, the power transmission fluid may include an amount of the borated dispersant sufficient to provide up to 1900 parts per million (ppm) by weight of boron in the finished fluid, such as for example, from about 50 to about 500 ppm by weight of boron in the finished fluid.

**Component (H): Lubricity, Antiwear and Extreme Pressure Agents**

Lubricity, antiwear and extreme pressure agents may be included. Examples of these include sulfur sources such as sulfurized fatty oils. "Sulfurized fatty oil" refers to sulfurized fatty acids, sulfurized fatty esters, individually or as mixtures thereof. Sulfurized fatty acid esters are preferred. The sulfurized fatty oils may be animal or vegetable in origin. Suitable sulfurized fatty oils include, for example, a sulfurized fatty acid ester containing about 10% sulfur and a sulfurized sperm oil containing about 10% sulfur.

In one particular embodiment, suitable sulfurized fatty oils include sulfurized transesterified triglycerides, such as those described in U.S. Pat. No. 4,380,499, which descriptions of sulfurized transesterified triglycerides are incorporated herein by reference. In one embodiment, a sulfurized transesterified triglyceride additive has a total acid component comprising no less than about 35 mol% saturated aliphatic acids and no more than about 65 mol% unsaturated fatty acids, and wherein the total acid component is further characterized as comprising more than about 20 mol% of monounsaturated acids, less than about 15 mol% of polyunsaturated fatty acids, more than about 20 mol% saturated aliphatic acids having 6 to 16 carbon atoms, including more than about 10 mol% saturated aliphatic acids having 6 to 14 carbon atoms, and less than about 15 mol% saturated aliphatic acids having 18 or more carbon atoms. Suitable sulfurized fatty oils also include those such as those described in U.S. Pat. No. 4,149,982, which descriptions of sulfurized fatty oils are incorporated herein by reference.

Other suitable sulfurized fatty oils include, for example, sulfurized lard oils, sulfurized fatty compounds, sulfurized methyl esters, sulfurized hydrocarbons, sulfurized oleic acid, sulfurized fatty ester-polyalkanol amides, and sulfurized fatty olefins.

Other antiwear agents include phosphorus-containing antiwear agents, such as those comprising an organic ester of phosphoric acid, phosphorous acid, or an amine salt thereof.

The phosphorus-containing antiwear agent may be present in an amount sufficient to provide about 50 to about 500 parts per million by weight of phosphorus in the power transmission fluid. As a further example, the phosphorus-containing antiwear agent may be present in an amount sufficient to provide about 150 to about 300 parts per million by weight of phosphorus in the power transmission fluid.

The fluid composition may include up to about 1.0 wt% of the phosphorus-containing antiwear agent. As a further example, the fluid composition may include from about 0.01 wt% to about 1.0 wt% of the phosphorus-containing antiwear agent, particularly about 0.2 wt% to about 0.3 wt% of the phosphorus-containing antiwear agent.

**Component (I): Metal Deactivators**

The formulations also may contain metal deactivators, which include materials commonly used for that purpose in this general class of fluids. These may comprise, for example, ashless dialkyl thiadiazoles. Dialkyl thiadiazoles suitable for the practice of the present invention may be of the general formula (I):

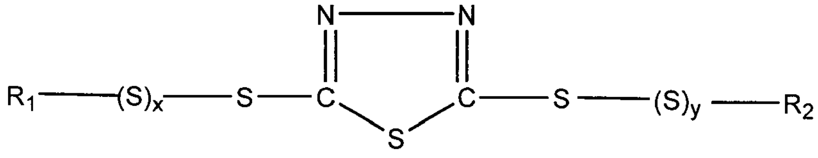

wherein $R_1$ and $R_2$ may be the same or different hydrocarbyl groups, and x and y independently may be integers from

0 to 8. In one aspect, $R_1$ and $R_2$ may be the same or different, linear, branched, or aromatic, saturated or unsaturated hydrocarbyl group having from about 6 to about 18 carbon atoms, particularly from about 8 to about 12 carbon atoms, and x and y each may be 0 or 1.

An suitable dialkyl thiadiazoles includes 2,5-bis(hydrocarbyldithio)-1,3,4-thiadiazoles. Examples of other suitable dialkyl thiadiazoles include, for example, 2,5-bis(hydrocarbylthio)-1,3,4-thiadiazoles, 2-(tert-hydrocarbyldithio)-5-mercapto-1,3,4-thiadiazoles, and bis-tert-dodecylthiothiadiazole.

Suitable dialkyl thiadiazoles also include those such as described, for example, in U.S. Pat. Nos. 4,149,982 and 4,591,645, and which descriptions are incorporated herein by reference. Mixtures of dialkyl thiadiazoles of formula (I) with monoalkyl thiadiazoles may also be used within the scope of the present invention.

As used herein, the term "hydrocarbyl group" or "hydrocarbyl" is used in its ordinary sense, which is well-known to those skilled in the art. Specifically, it refers to a group having a carbon atom directly attached to the remainder of a molecule and having a predominantly hydrocarbon character. Examples of hydrocarbyl groups include:

(1) hydrocarbon substituents, that is, aliphatic (e.g., alkyl or alkenyl), alicyclic (e.g., cycloalkyl, cycloalkenyl) substituents, and aromatic-, aliphatic-, and alicyclic-substituted aromatic substituents, as well as cyclic substituents wherein the ring is completed through another portion of the molecule (e.g., two substituents together form an alicyclic radical);
(2) substituted hydrocarbon substituents, that is, substituents containing non-hydrocarbon groups which, in the context of the description herein, do not alter the predominantly hydrocarbon substituent (e.g., halo (especially chloro and fluoro), hydroxy, alkoxy, mercapto, alkylmercapto, nitro, nitroso, and sulfoxy);
(3) hetero-substituents, that is, substituents which, while having a predominantly hydrocarbon character, in the context of this description, contain other than carbon in a ring or chain otherwise composed of carbon atoms. Heteroatoms include sulfur, oxygen, nitrogen, and encompass substituents such as pyridyl, furyl, thienyl, and imidazolyl. In general, no more than two, or as a further example, no more than one, non-hydrocarbon substituent will be present for every ten carbon atoms in the hydrocarbyl group; typically, there will be no non-hydrocarbon substituent in the hydrocarbyl group.

The fluid composition may include up to about 2.0 wt% of the metal deactivators.

## Component (J): Supplemental Friction Modifiers

Supplemental friction modifiers optionally are used in automatic transmission fluids to help decrease friction between surfaces (e.g., the members of a torque converter clutch or a shifting clutch) at low sliding speeds. The result is a friction-vs.-velocity ($\mu$-v) curve that has a positive slope, which in turn leads to smooth clutch engagements and minimizes "stick-slip" behavior (e.g., shudder, noise, and harsh shifts).

Friction modifiers include such compounds as aliphatic amines or ethoxylated aliphatic amines, ether amines, alkoxylated ether amines, aliphatic fatty acid amides, acylated amines, aliphatic carboxylic acids, aliphatic carboxylic esters, polyol esters, aliphatic carboxylic ester-amides, imidazolines, tertiary amines, aliphatic phosphonates, aliphatic phosphates, aliphatic thiophosphonates, aliphatic thiophosphates, etc., wherein the aliphatic group usually contains one or more carbon atoms so as to render the compound suitably oil soluble. As a further example, the aliphatic group may contain about 8 or more carbon atoms.

One group of friction modifiers includes the N-aliphatic hydrocarbyl-substituted diethanol amines in which the N-aliphatic hydrocarbyl-substituent is at least one straight chain aliphatic hydrocarbyl group free of acetylenic unsaturation and having in the range of about 14 to about 20 carbon atoms.

An example of a suitable friction modifier system is composed of a combination of at least one N-aliphatic hydrocarbyl-substituted diethanol amine and at least one N-aliphatic hydrocarbyl-substituted trimethylene diamine in which the N-aliphatic hydrocarbyl-substituent is at least one straight chain aliphatic hydrocarbyl group free of acetylenic unsaturation and having in the range of about 14 to about 20 carbon atoms. Further details concerning this friction modifier system are set forth in U.S. Pat. Nos. 5,372,735 and 5,441,656.

Another friction modifier system is based on the combination of (i) at least one di(hydroxyalkyl) aliphatic tertiary amine in which the hydroxyalkyl groups, being the same or different, each contain from about 2 to about 4 carbon atoms, and in which the aliphatic group is an acyclic hydrocarbyl group containing from about 10 to about 25 carbon atoms, and (ii) at least one hydroxyalkyl aliphatic imidazoline in which the hydroxyalkyl group contains from about 2 to about 4 carbon atoms, and in which the aliphatic group is an acyclic hydrocarbyl group containing from about 10 to about 25 carbon atoms. For further details concerning this friction modifier system, reference should be had to U.S. Pat. No. 5,344,579.

Another suitable group of friction modifiers include polyolesters, for example, glycerol monooleate (GMO), glycerol monolaurate (GML), and the like.

Generally speaking, the fluid compositions may contain up to about 1.25 wt%, or, as a further example, from about 0.05 to about 1 wt% of one or more friction modifiers.

**Component (K): Antioxidants**

In some embodiments, antioxidant compounds may be included in the compositions. Antioxidants include phenolic antioxidants, aromatic amine antioxidants, sulfurized phenolic antioxidants, and organic phosphites, among others. Examples of phenolic antioxidants include 2,6-di-tert-butylphenol, liquid mixtures of tertiary butylated phenols, 2,6-di-tert-butyl-4-methylphenol, 4,4'-methylenebis(2,6-di-tert-butylphenol),2,2'-methylenebis(4-methyl6-ter t-butylphenol), mixed methylene-bridged polyalkyl phenols, and 4,4'-thiobis(2-methyl-6-tert-butylphenol). N,N'-di-sec-butyl-phenylenediamine, 4-isopropylaminodiphenylamine, phenyl-.alpha.-naphthyl amine, phenyl-.alpha.-naphthyl amine, and ring-alkylated diphenylamines. Examples include the sterically hindered tertiary butylated phenols, bisphenols and cinnamic acid derivatives and combinations thereof. The amount of antioxidant in the fluid compositions described herein may include up to about 5 wt% based on the total weight of the fluid formulation. It may range particularly from about 0.01 to about 3.0 wt%, more particularly from about 0.1 wt% to about 0.7 wt%, based on the total weight of the fluid formulation.

**Component (L): Anti-Rust agents**

Rust or corrosion inhibitors are another type of inhibitor additive for use in embodiments of the present disclosure. Such materials include monocarboxylic acids and polycarboxylic acids. Examples of suitable monocarboxylic acids are octanoic acid, decanoic acid and dodecanoic acid. Suitable polycarboxylic acids include dimer and trimer acids such as are produced from such acids as tall oil fatty acids, oleic acid, linoleic acid, or the like. Another useful type of rust inhibitor may comprise alkenyl succinic acid and alkenyl succinic anhydride corrosion inhibitors such as, for example, tetrapropenylsuccinic acid, tetrapropenylsuccinic anhydride, tetradecenylsuccinic acid, tetradecenylsuccinic anhydride, hexadecenylsuccinic acid, hexadecenylsuccinic anhydride, and the like. Also useful are the half esters of alkenyl succinic acids having about 8 to about 24 carbon atoms in the alkenyl group with alcohols such as the polyglycols. Other suitable rust or corrosion inhibitors include ether amines; acid phosphates; amines; polyethoxylated compounds such as ethoxylated amines, ethoxylated phenols, and ethoxylated alcohols; imidazolines; aminosuccinic acids or derivatives thereof, and the like. Materials of these types are commercially available. Mixtures of such rust or corrosion inhibitors can be used. The amount of corrosion inhibitor in the fluid compositions described herein may include up to about 2.0 wt% based on the total weight of the composition. It may range particularly from about 0.01 to about 2.0 wt%, more particularly from about 0.01 to about 0.3 wt%, based on the total weight of the formulation.

**Component (M): Copper Corrosion Inhibitors**

In some embodiments, copper corrosion inhibitors may constitute another class of additives suitable for inclusion in the compositions. Such compounds include thiazoles, triazoles, and thiadiazoles. Examples of such compounds include benzotriazole, tolyltriazole, octyltriazole, decyltriazole, dodecyltriazole, 2-mercapto benzothiazole, 2,5-dimercapto-1,3,4-thiadiazole, 2-mercapto-5-hydrocarbylthio-1,3,4-thiadiazoles, 2-mercapto-5- hydrocarbyldithio-1,3,4-thiadiazoles, 2,5-bis(hydrocarbylthio)- 1,3,4-thiadiazoles, and 2,5-bis(hydrocarbyldithio)-1,3,4-thiadiazoles. Suitable compounds include the 1,3,4-thiadiazoles, a number of which are available as articles of commerce, and also combinations of triazoles such as tolyltriazole with a 1,3,5-thiadiazole such as a 2,5-bis(alkyldithio)-1,3,4-thiadiazole. Regarding dialkyl thiadiazoles, for imparting corrosion inhibition, that additive previously has been used in much smaller treat levels than the levels used in the present invention to enhance extreme pressure and antiwear properties (when used in combination with relatively high levels of sulfurized fatty oil as indicated herein). The 1,3,4-thiadiazoles are generally synthesized from hydrazine and carbon disulfide by known procedures. See, for example, U.S. Pat. Nos. 3,862,798 and 3,840,549.

The amount of the corrosion inhibitor in the fluid compositions described herein may include up to about 1.0 wt% based on the total weight of the composition.

**Component (N): Viscosity Index Improvers**

Viscosity index improvers for use in the above described fluid compositions and gear lubricant compositions may be selected from polyisoalkylene compounds, polymethacrylate compounds, and any conventional viscosity index improvers. An example of a suitable polyisoalkylene compound for use as a viscosity index improver includes polyisobutylene having a weight average molecular weight ranging from about 700 to about 2,500. Embodiments may include a mixture of one or more viscosity index improvers of the same or different molecular weight.

Suitable viscosity index improvers may include styrene-maleic esters, polyalkylmethacrylates, and olefin copolymer viscosity index improvers. Mixtures of the foregoing products can also be used as well as dispersant and dispersant-antioxidant viscosity index improvers.

The fluid composition may include up to about 25 wt% based of a viscosity index improver. It may contain viscosity index improver in an amount ranging particularly from about 0.1 to about 25 wt%, based on the total weight of the formulation.

**Component (O): Antifoam agents**

In some embodiments, a foam inhibitor may form another component suitable for use in the compositions. Foam inhibitors may be selected from silicones, polyacrylates, surfactants, and the like. The amount of antifoam agent in the fluid compositions described herein may include up to about 0.5 wt% based on the total weight of the composition. It may range particularly from about 0.01 to about 0.5 wt%, more particularly from about 0.01 to about 0.1 wt%, based on the total weight of the formulation.

**Component (P): Seal Swell agents**

The seal swell agent used in the transmission fluid compositions described herein is selected from oil-soluble diesters, oil-soluble sulfones, and mixtures thereof. Generally speaking the most suitable diesters include the adipates, azelates, and sebacates of $C_8$-$C_{13}$ alkanols (or mixtures thereof), and the phthalates of $C_4$-$C_{13}$ alkanols (or mixtures thereof). Mixtures of two or more different types of diesters (e.g., dialkyl adipates and dialkyl azelates, etc.) can also be used. Examples of such materials include the n-octyl, 2-ethylhexyl, isodecyl, and tridecyl diesters of adipic acid, azelaic acid, and sebacic acid, and the n-butyl, isobutyl, pentyl, hexyl, heptyl, octyl, nonyl, decyl, undecyl, dodecyl, and tridecyl diesters of phthalic acid.

Other esters which may give generally equivalent performance are polyol esters. Suitable sulfone seal swell agents are described in U.S. Pat. Nos. 3,974,081 and 4,029,587. Typically these products are employed at levels in the range of up to about 30 wt%. The amount of seal swell agent in the fluid compositions described herein may range particularly from about 1 to about 15 wt%, particularly from about 0.25 wt% to about 1 wt%, in the finished fluid.

Suitable seal swell agents are the oil-soluble dialkyl esters of (i) adipic acid, (ii) sebacic acid, or (iii) phthalic acid. The adipates and sebacates may be used in amounts in the range of up to about 30 wt%. These amounts may range particularly from about 1 to about 15 wt%, more particularly from about 1.5 to about 10 wt%, in the finished fluid. In the case of the phthalates, the levels in the fluid may fall in the range of from about 1.5 to about 15 wt%.

**Component (Q): Dye**

A colorant may be added to the fluid to give it a detectable character. Generally, azo class dyes are used, such as C.I. Solvent Red 24 or C.I. Solvent Red 164, as set forth in the "Color Index" of the American Association of textile Chemists and Colorists and the Society of Dyers and Colourists (U.K.). For automatic transmission fluids, Automatic Red Dye is preferred. Dye may be present in a very minimal amount, such as up to about 400 ppm, and particularly ranging from about 200 to about 300 ppm in the finished fluid.

**Component (R): Diluent**

If the additives are provided in an additive package concentrate, a suitable carrier diluent is added to ease blending, solubilizing, and transporting the additive package. The diluent oil needs to be compatible with the base oil and the additive package. In one embodiment, the diluent is present in the concentrate in an amount of between about 5 to about 20%, although it can vary widely with application. Generally speaking, less diluent is preferable as it lowers transportation costs and treat rates.

Additives used in formulating the compositions described herein can be blended into base oil individually or in various sub-combinations. However, it is suitable to blend all of the components concurrently using an additive concentrate (i.e., additives plus a diluent, such as a hydrocarbon solvent). The use of an additive concentrate takes advantage of the mutual compatibility afforded by the combination of ingredients when in the form of an additive concentrate. Also, the use of a concentrate reduces blending time and lessens the possibility of blending errors.

Fluid compositions described herein may include diluent in an amount of up to about 25 wt% based on the total weight of the finished fluid.

**Base Oil**

Transmission fluids of the present invention typically (but not necessarily always) are formulated with a major

amount of a base oil and a minor amount of the additive package which includes the extreme-pressure/antiwear enhancing combination of sulfurized fatty oil and dialkyl thiadiazole at the prescribed addition levels. In one embodiment, a power transmission fluid composition is formulated to contain a major amount of base oil and about 3 wt% to about 20 wt%, particularly about 5 wt% to about 13 wt%, of an additive composition containing the sulfurized fatty oil and dialkyl thiadiazole in the respective levels prescribed herein.

Base oils suitable for use in formulating fluid compositions according to the present disclosure may be selected from any of the synthetic or natural oils or mixtures thereof. Natural oils include animal oils and vegetable oils (e.g., castor oil, lard oil) as well as mineral lubricating oils such as liquid petroleum oils and solvent treated or acid-treated mineral lubricating oils of the paraffinic, naphthenic or mixed paraffinic-naphthenic types. Oils derived from coal or shale are also suitable. The base oil typically has a viscosity of, for example, from about 2 to about 15 cSt and, as a further example, from about 2 to about 10 cSt at 100° C. Further, oils derived from a gas-to-liquid process are also suitable.

Synthetic oils include hydrocarbon oils such as polymerized and interpolymerized olefins (e.g., polybutylenes, polypropylenes, propylene isobutylene copolymers, etc.); polyalphaolefins such as poly(1-hexenes), poly-(1-octenes), poly(1-decenes), etc. and mixtures thereof; alkylbenzenes (e.g., dodecylbenzenes, tetradecylbenzenes, di-nonylbenzenes, di-(2-ethylhexyl)benzenes, etc.); polyphenyls (e.g., biphenyls, terphenyl, alkylated polyphenyls, etc.); alkylated diphenyl ethers and alkylated diphenyl sulfides and the derivatives, analogs and homologs thereof and the like.

Alkylene oxide polymers and interpolymers and derivatives thereof where the terminal hydroxyl groups have been modified by esterification, etherification, etc., constitute another class of known synthetic oils that may be used. Such oils are exemplified by the oils prepared through polymerization of ethylene oxide or propylene oxide, the alkyl and aryl ethers of these polyoxyalkylene polymers (e.g., methyl-polyisopropylene glycol ether having an average molecular weight of about 1000, diphenyl ether of polyethylene glycol having a molecular weight of about 500-1000, diethyl ether of polypropylene glycol having a molecular weight of about 1000-1500, etc.) or mono- and polycarboxylic esters thereof, for example, the acetic acid esters, mixed $C_{3-8}$ fatty acid esters, or the $C_{13}$ Oxo acid diester of tetraethylene glycol.

Another class of synthetic oils that may be used includes the esters of dicarboxylic acids (e.g., phthalic acid, succinic acid, alkyl succinic acids, alkenyl succinic acids, maleic acid, azelaic acid, suberic acid, sebacic acid, fumaric acid, adipic acid, linoleic acid dimer, malonic acid, alkyl malonic acids, alkenyl malonic acids, etc.) with a variety of alcohols (e.g., butyl alcohol, hexyl alcohol, dodecyl alcohol, 2-ethylhexyl alcohol, ethylene glycol, diethylene glycol monoether, propylene glycol, etc.) Specific examples of these esters include dibutyl adipate, di(2-ethylhexyl)sebacate, di-n-hexyl fumarate, dioctyl sebacate, diisooctyl azelate, diisodecyl azelate, dioctyl phthalate, didecyl phthalate, dieicosyl sebacate, the 2-ethylhexyl diester of linoleic acid dimer, the complex ester formed by reacting one mole of sebacic acid with two moles of tetraethylene glycol and two moles of 2-ethylhexanoic acid and the like.

Esters useful as synthetic oils also include those made from $C_5$ to $C_{12}$ monocarboxylic acids and polyols and polyol ethers such as neopentyl glycol, trimethylol propane, pentaerythritol, dipentaerythritol, tripentaerythritol, etc.

Hence, the base oil used which may be used to make the transmission fluid compositions as described herein may be selected from any of the base oils in Groups I-V as specified in the American Petroleum Institute (API) Base Oil Interchangeability Guidelines.

Such base oil groups are as follows (Table B):

**Table B**

| Base Oil Group[1] | Sulfur (wt%) | | Saturates (wt%) | Viscosity Index |
|---|---|---|---|---|
| Group I | > 0.03 | and/or | < 90 | 80 to 120 |
| Group II | ≤ 0.03 | And | ≥ 90 | 80 to 120 |
| Group III | ≤ 0.03 | And | ≥ 90 | ≥ 120 |
| Group IV | all polyalphaolefins (PAOs) | | | |
| Group V | all others not included in Groups I-IV | | | |

[1]Groups I-III are mineral oil base stocks.

As set forth above, the base oil may be a poly-alpha-olefin (PAO). Typically, the poly-alpha-olefins are derived

from monomers having from about 4 to about 30, or from about 4 to about 20, or from about 6 to about 16 carbon atoms. Examples of useful PAOs include those derived from octene, decene, mixtures thereof, and the like. PAOs may have a viscosity of from about 2 to about 15, or from about 3 to about 12, or from about 4 to about 8 cSt at 100° C. Examples of PAOs include 4 cSt at 100° C poly-alpha-olefins, 6 cSt at 100° C poly-alpha-olefins, and mixtures thereof. Mixtures of mineral oil with the foregoing poly-alpha-olefins may be used.

The base oil may be an oil derived from Fischer-Tropsch synthesized hydrocarbons. Fischer-Tropsch synthesized hydrocarbons are made from synthesis gas containing $H_2$ and CO using a Fischer-Tropsch catalyst. Such hydrocarbons typically require further processing in order to be useful as the base oil. For example, the hydrocarbons may be hydroisomerized using processes disclosed in U.S. Pat. Nos. 6,103,099 or 6,180,575; hydrocracked and hydroisomerized using processes disclosed in U.S. Pat. Nos. 4,943,672 or 6,096,940; dewaxed using processes disclosed in U.S. Pat. No. 5,882,505; or hydroisomerized and dewaxed using processes disclosed in U.S. Pat. Nos. 6,013,171; 6,080,301; or 6,165,949.

Unrefined, refined and rerefined oils, either natural or synthetic (as well as mixtures of two or more of any of these) of the type disclosed hereinabove can be used in the base oils. Unrefined oils are those obtained directly from a natural or synthetic source without further purification treatment. For example, a shale oil obtained directly from retorting operations, a petroleum oil obtained directly from primary distillation or ester oil obtained directly from an esterification process and used without further treatment would be an unrefined oil. Refined oils are similar to the unrefined oils except they have been further treated in one or more purification steps to improve one or more properties. Many such purification techniques are known to those skilled in the art such as solvent extraction, secondary distillation, acid or base extraction, filtration, percolation, etc. Rerefined oils are obtained by processes similar to those used to obtain refined oils applied to refined oils which have been already used in service. Such rerefined oils are also known as reclaimed or reprocessed oils and often are additionally processed by techniques directed to removal of spent additives, contaminants, and oil breakdown products.

In selecting any of the foregoing optional additives, it is important to ensure that the selected component(s) is/are soluble or stably dispersible in the additive package and finished ATF composition, are compatible with the other components of the composition, and do not interfere significantly with the performance properties of the composition, such as the anti-NVH, anti-NVH durability, extreme pressure, antiwear, friction, viscosity and/or shear stability properties, needed or desired, as applicable, in the overall finished composition.

In general, the ancillary additive components are employed in the oils in minor amounts sufficient to improve the performance characteristics and properties of the base fluid. The amounts will thus vary in accordance with such factors as the viscosity characteristics of the base fluid employed, the viscosity characteristics desired in the finished fluid, the service conditions for which the finished fluid is intended, and the performance characteristics desired in the finished fluid.

However, generally speaking, and referring to Table C below, the following general concentrations (weight percent unless otherwise indicated) of the optional additional components in the base fluids are illustrative:

**Table C**

| Optional Additive Component | Range |
|---|---|
| G | 0.0-15.00 |
| H | 0.0-1.00 |
| I | 0.0-2.00 |
| J | 0.0-1.25 |
| K | 0.0-5.00 |
| L | 0.0-2.0 |
| M | 0.0-1.0 |
| N | 0.0-25.0 |
| O | 0.0-0.5 |
| P | 0.0-30.0 |
| Q | 0.0-400 ppm |
| R | 0.0-25.0 (in concentrate balance) |

Exemplary, non-limiting fully formulated fluid compositions for providing improved anti-NVH and/or anti-NVH durability according to embodiments herein are set forth in Table D below. Referenced components correspond to previously identified classes of components. Key components, viz., Components (A)-(D) in the case of NVH suppression, and Components (A)-(F) in the case of anti-NVH durability improvements, within this formulation will be balanced pursuant to guidance provided elsewhere herein within the respective prescribed range amounts.

**Table D**

| Component | General Range Amount, wt% | Preferred Range Amount, wt% |
|---|---|---|
| Friction Modifier (Component (A)) | 0.002-0.25 | 0.002-0.25 |
| Friction Modifier (Component (B)) | 0.01-0.2 | 0.01-0.2 |
| Metallic Detergent (Component (C)) | 0.01-0.6 | 0.01-0.6 |
| Dispersant (Component (D)) | 0.01-10 | 0.01-10 |
| Surfactant/Friction Modifier (Component (E)) | 0-0.40 | 0.01-0.40 |
| Non-ionic Surfactant (Component ((F) | 0-0.5 | 0.01-0.5 |
| Antioxidants | 0.1-0.7 | 0.1-0.5 |
| Sulfur Source | 0.05-1.5 | 0.05-1.5 |
| Thiadiazole | 0-2.0 | 0-2.0 |
| Rust Inhibitors | 0-0.3 | 0-0.2 |
| Antifoam Agents | 0-0.5 | 0-0.5 |
| Diluent Oil | 0-25 | 0-25 |
| Basestock | 60-95 | 60-95 |

It will be appreciated that the individual components employed can be separately blended into the base fluid or can be blended therein in various subcombinations, if desired. Ordinarily, the particular sequence of such blending steps is not crucial. Moreover, such components can be blended in the form of separate solutions in a diluent. It is preferable, however, to blend the additive components used in the form of a concentrate, as this simplifies the blending operations, reduces the likelihood of blending errors, and takes advantage of the compatibility and solubility characteristics afforded by the overall concentrate.

Additive concentrates can thus be formulated to contain all of the additive components and if desired, some of the base oil component, in amounts proportioned to yield finished fluid blends consistent with the concentrations described above. In most cases, the additive concentrate will contain one or more diluents such as light mineral oils, to facilitate handling and blending of the concentrate. Thus concentrates containing up to about 50 wt% of one or more diluents or solvents can be used, provided the solvents are not present in amounts that interfere with the low and high temperature and flash point characteristics and the performance of the finished power transmission fluid composition. In this regard, the additive components used pursuant to this invention may be selected and proportioned such that an additive concentrate or package formulated from such components will have a flash point of about 170°C or above, using the ASTM D-92 test procedure.

Power transmission fluids of the embodiments herein, as formulated as described above, also generally provide enhanced extreme pressure properties for applications where metal-to-metal contact is made under high pressures, e.g., pressures in excess of 2 GPa. Such fluids are suitable for automatic and manual transmissions such as step automatic transmissions, continuously variable transmissions, automated manual transmissions, and dual clutch transmissions. High metal-to-metal contact pressures such as those found in automotive transmissions, for example, may cause damage to transmission parts if a lubricant is used that does not possess sufficient extreme pressure protection characteristics. However, power transmission fluid compositions as described herein also have good extreme pressure performance characteristics.

The fluid compositions of embodiments of this invention described herein may be advantageously used in a wide variety of applications, including, for example, in automatic transmission fluids, manual transmission fluids, fluids used in dual clutch transmissions, fluids used in heavy duty transmissions, fluids used in continuously variable transmissions, and gear lubricants. Further, the automatic transmission fluid may be suitable for use in at least one transmission with a slipping torque converter clutch, a lock-up torque converter clutch, a starting clutch, electronically controlled converter clutch, and/or one or more shifting clutches, and so forth. Such transmissions may include four-, five-, six-,

and seven-speed or more transmissions, and continuously variable transmissions of the chain, belt, disk, or toroidal type. The clutch used with these fluids may comprise, e.g., the same clutch materials as described indicated above. They also may be used in gear applications, such as industrial gear applications and automotive gear applications. Gear-types may include, but are not limited to, spur, spiral bevel, helical, planetary, and hypoid. They may be used in axles, transfer cases, and the like. Further, they may also be useful in metal working applications.

**EXAMPLES**

Illustrative compositions suitable for use in the practice of this invention are presented in the following Examples, wherein all parts and percentages are by weight unless specified otherwise.

**EXAMPLE 1: Squawk Pressure Studies**

Component effects of automatic transmission fluids were evaluated in eight fluid samples, designated ATF-A through ATF-H (see Table 1 below). The test fluids had a baseline composition corresponding to the preferred formulation described above in Table D with the following modifications. Six design variables, designated I- VI, which corresponded to six of the components identified in Table D, were applied, where "+" means the variable was present in the highest level of the corresponding range described in Table D and "-" indicates its absence or presence at the lowest level of the corresponding range described in Table D from a given sample run, with the further qualification that "+" under Design Variable VI indicates the sulfur source was sulfurized transesterified triglyceride while "-" indicated that it was sulfurized ester. Design variables I-VI corresponded to the following six components of the baseline fluid: I: Component (D); II: Component (B); III: Component (C) ; IV: Component (A); V: Rust Inhibitors: and VI: Sulfur Source.

Friction characteristics for the matrix of fluids were investigated on a Low Speed SAE#2 machine. Tests were conducted with cellulose paper based friction material lined plates, commercially obtained as BW 4329 plates from Borg Warner Automotive. Friction was measured and recorded at 40˚C and 120˚C at four different pressures: 0.40, 0.79, 1.97 and 3.39 N/mm$^2$. Squawk pressure was measured on a commercially-available ZF GK Rig using a test procedure supplied by ZF with the apparatus. The squawk pressure results corresponding to the various tested sample fluids are also reported in Table 1 below.

**Table 1**

| | Design Variables | | | | | | Squawk pressure, N/mm$^2$ |
|---|---|---|---|---|---|---|---|
| Fluid | I | II | III | IV | V | VI | |
| ATF-A | + | - | + | - | + | - | 0.50 |
| ATF-B | - | + | + | - | - | + | 1.90 |
| ATF-C | + | - | - | - | - | + | 0.40 |
| ATF-D | + | + | + | + | + | + | 1.38 |
| ATF-E | - | - | + | + | - | - | 2.20 |
| ATF-F | + | + | - | + | - | - | 1.13 |
| ATF-G | - | + | - | - | + | - | 1.05 |
| ATF-H | - | - | - | + | + | + | 1.60 |

Using these fluid samples FIGS. 4-10 are plots of squawk pressure versus $\partial\mu/\partial T$ as measured sliding speeds at a pressure of 0.79 N/mm$^2$. FIG. 11 is a plot of $R^2$ (for correlation of $\partial\mu/\partial T$ to squawk) versus rpm for the test pressure condition of 0.79 N/mm$^2$. FIGS. 12-17 are plots of squawk pressure versus $\partial\mu/\partial T$ as measured sliding speeds at a pressure of 3.40 N/mm$^2$. FIGS. 18-19 show coefficient of friction $\mu$ results observed for the eight test fluids at a pressure of 0.79 N/mm$^2$ at temperatures at 40˚C and 120˚C, respectively. Temperatures for $\partial\mu/\partial T$ were bulk temperatures at given pressure and rpm. For example, if $\mu$ (40˚C) was 0.152 and $\mu$ (120˚C) was 0.148, then $\partial\mu/\partial T$ equal (0.148-0.152) /(120-40) = 0.00005. Values were multiplied by 10,000 for ease of handling. FIG. 20 is a plot coefficient of $\partial\mu/\partial T$ versus sliding speed at a pressure of 0.79 N/mm$^2$. FIGS. 21-28 are plots of squawk pressure versus $\partial\mu/\partial P$ at a series of different test conditions (viz., rpm's, temperature, pressure), as indicated therein. FIG. 29 shows coefficient of friction $\mu$ results observed for test fluids at temperatures at 40˚C and 120˚C, respectively.

The results indicate that squawk control improves with negative $\partial\mu/\partial T$. The results also show that merely providing a fluid having a positive slope of $\mu$-v is insufficient to improve squawk performance. The correlation between

squawk and $\partial\mu/\partial T$ was only observed at specific conditions in the low speed rig, viz., at a pressure of 0.79 $N/mm^2$ and above 50 rpm (0.27 m/s). The results also indicate that squawk control improves with negative $\partial\mu/\partial P$, albeit perhaps not as significantly as $\partial\mu/\partial T$ under the particular testing conditions applied in these studies.

The results also show that the presence or absence of certain individual components, viz., Components (A)-(D), in the additive can significantly influence variation in friction level due to change in temperature. The results indicated that four out of the six variables strongly influence $\partial\mu/\partial T$ (and $\partial\mu/\partial P$), which are Components (A)-(D) described herein. These results indicate that levels of these four components should balanced to introduce a small negative $\partial\mu/\partial T$ condition for improved squawk performance. In general it was found that the noise phenomena decreases with decreasing quasi-static friction level. Higher quasi-static friction is generally desirable for higher torque transmission.

As used throughout the specification and claims, "a" and/or "an" may refer to one or more than one. Each numerical parameter should at least be construed in light of the number of reported significant digits and by applying ordinary rounding techniques. The numerical values set forth in the specific examples are reported as precisely as possible. Any numerical value, however, inherently contains certain errors necessarily resulting from the standard deviation found in their respective testing measurements.

Other embodiments of the present invention will be apparent to those skilled in the art from consideration of the specification, figure and practice of the invention disclosed herein. It is intended that the specification and examples be considered as exemplary only, with the true scope of the invention being indicated by the following claims.

## Claims

1. A method of suppressing NVH in a power transmission apparatus having a friction torque transfer apparatus including the step of maintaining a negative $\partial\mu/\partial T$ slope during engaging, slipping or modulating of said friction torque transfer apparatus.

2. The method of claim 1, wherein the friction torque transfer apparatus is selected from a shifting clutch, a starting clutch, a torque converter clutch, a band clutch, disk or plate clutch, and a limited slip differential clutch.

3. The method of claim 1, wherein the friction torque transfer apparatus is a shifting clutch.

4. The method of any one of claims 1-3, wherein the transmission apparatus is a multi-speed transmission including at least a four-speed or more transmission.

5. The method of any one of claims 1-3, wherein the transmission apparatus is a multi-speed transmission including one of a five-speed automatic transmission, a six-speed automatic transmission, and a seven-speed automatic transmission.

6. The method of any one of claims 1-5, wherein the transmission apparatus includes a dual-clutch transmission.

7. The method of any one of claims 1-5, wherein the transmission apparatus includes a continuously variable transmission.

8. The method of any one of claims 1-7, wherein the negative $\partial\mu/\partial T$ slope is maintained without reducing static or quasi-static friction at the clutch during the engagement.

9. The method of any one of claims 1-8, wherein the controlled NVH includes squawk.

10. A method of suppressing NVH in a power transmission apparatus having a friction torque transfer apparatus including the step of maintaining a negative $\partial\mu/\partial P$ slope during engaging, slipping or modulating of the friction torque transfer apparatus.

11. A power transmission apparatus including a friction torque transfer apparatus having a clutch surface in contact with a transmission fluid, said transmission being operable to maintain a negative $\partial\mu/\partial T$ slope during engaging, slipping or modulating of the friction torque transfer apparatus.

12. The power transmission apparatus of claim 11, wherein the friction torque transfer apparatus is selected from a shifting clutch, a starting clutch, a torque converter clutch, a band clutch, disk or plate clutch, and a limited slip differential clutch.

13. The power transmission apparatus of claim 11, wherein the friction torque transfer apparatus includes a shifting clutch having a clutch surface in contact with a transmission fluid composition, said transmission operable to maintain a negative $\partial\mu/\partial T$ slope during engagement of the shifting clutch.

14. The transmission of any one of claims 11-13, wherein the transmission includes a continuously variable transmission.

15. The transmission of any one of claims 11-13, wherein the transmission includes a dual clutch transmission.

16. The transmission of any one of claims 11-13, wherein the transmission includes an automatic transmission.

17. The transmission of any one of claims 11-13, wherein the transmission includes a manual transmission.

18. The transmission of any one of claims 11-17, wherein the transmission includes one or more of an electronically controlled converter clutch, a slipping torque converter, a lock-up torque converter, a starting clutch, and one or more shifting clutches.

19. The transmission of any one of claims 11-18, wherein the transmission apparatus includes a multi-speed transmission comprising at least a four-speed or more transmission

20. The transmission of any one of claims 11-13, wherein the transmission comprises a belt, chain, or disk-type continuously variable transmission, a 4-speed or more automatic transmission, a manual transmission, an automated manual transmission, or a dual clutch transmission.

21. A vehicle including an engine, and the transmission of any one of claims 11-20.

22. The vehicle of claim 21, wherein the vehicle is a heavy duty bus.

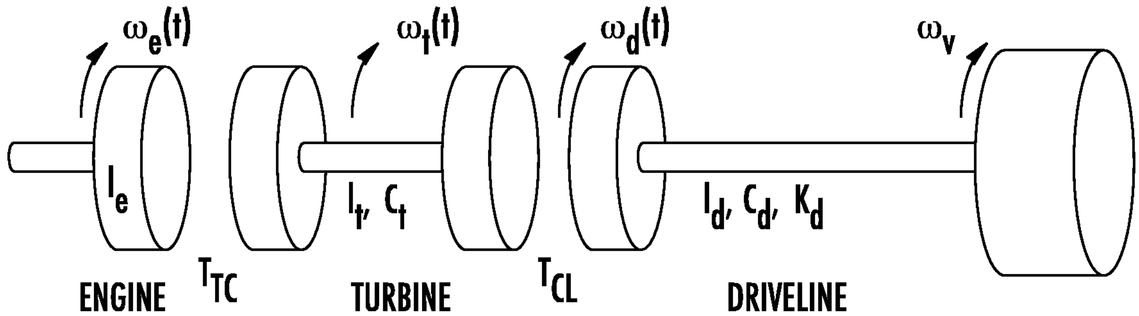
$\omega_e(t)$
$\omega_t(t)$
$\omega_d(t)$
$\omega_v$
$I_e$
$I_t$, $C_t$
$I_d$, $C_d$, $K_d$
ENGINE
$T_{TC}$
TURBINE
$T_{CL}$
DRIVELINE

FIG. 1

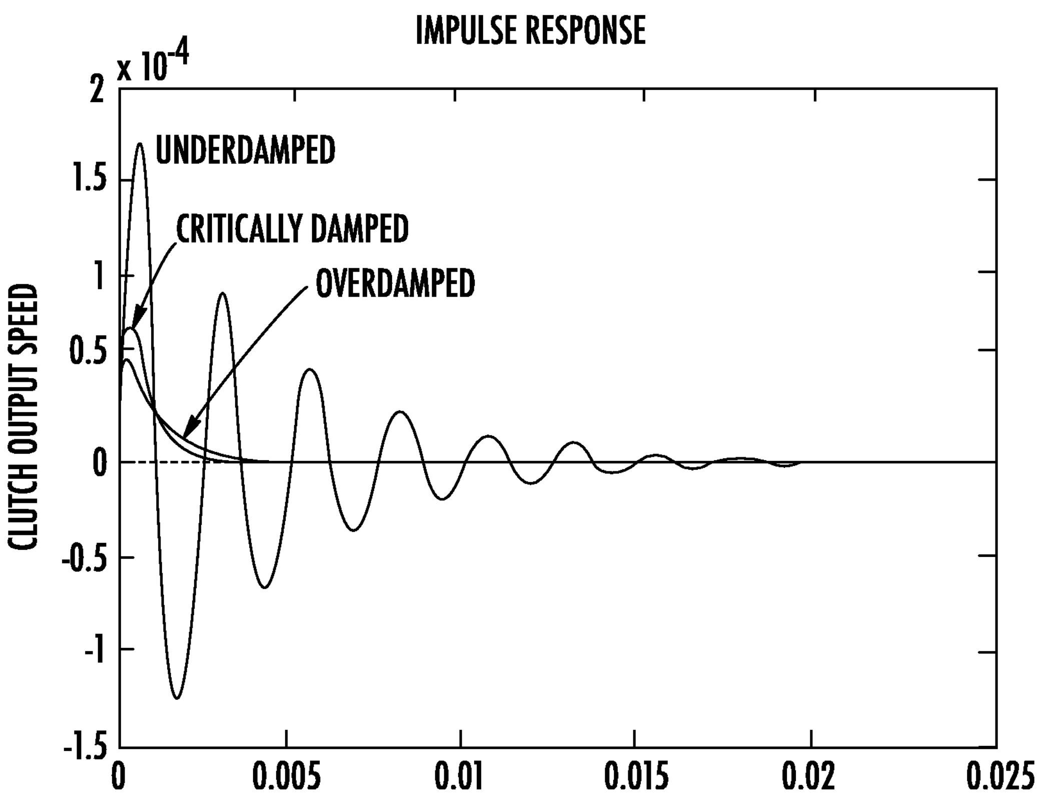
IMPULSE RESPONSE
x 10^-4
2
1.5
1
0.5
0
-0.5
-1
-1.5
UNDERDAMPED
CRITICALLY DAMPED
OVERDAMPED
CLUTCH OUTPUT SPEED
0
0.005
0.01
0.015
0.02
0.025

FIG. 2

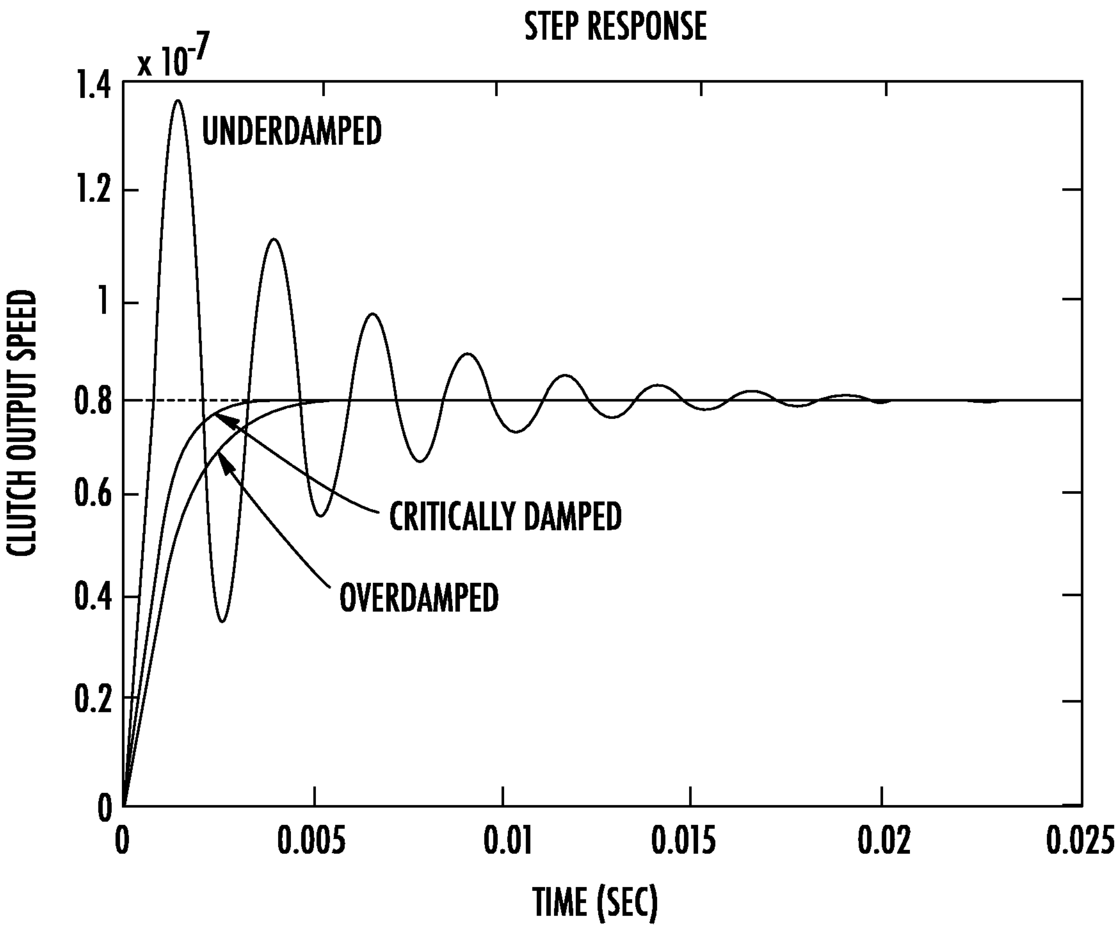
STEP RESPONSE
x 10^-7
1.4
1.2
1
0.8
0.6
0.4
0.2
0
UNDERDAMPED
CRITICALLY DAMPED
OVERDAMPED
CLUTCH OUTPUT SPEED
0
0.005
0.01
0.015
0.02
0.025
TIME (SEC)

FIG. 3

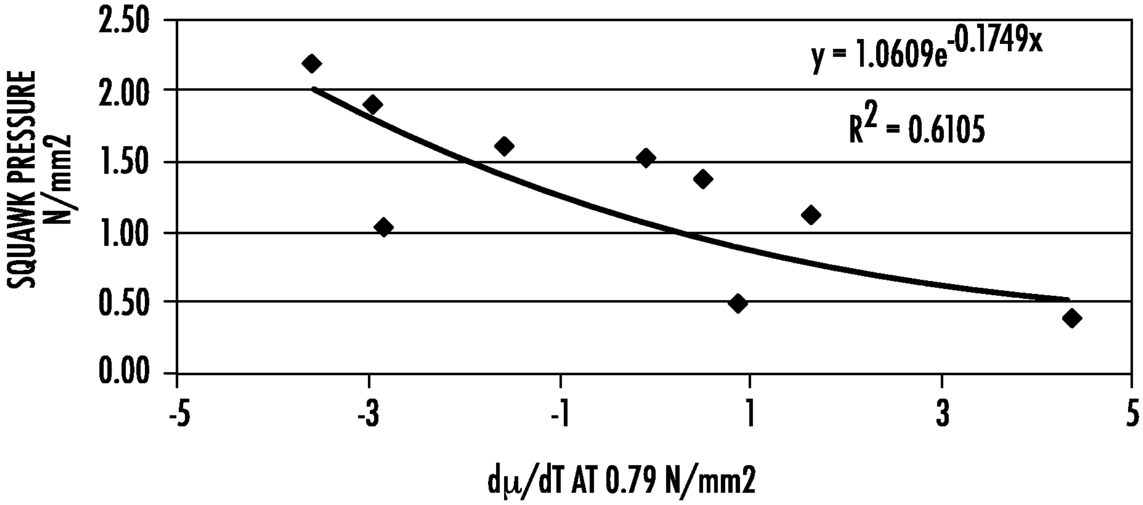
2.50
2.00
1.50
1.00
0.50
0.00
SQUAWK PRESSURE N/mm2
y = 1.0609e-0.1749x
R2 = 0.6105
-5
-3
-1
1
3
5
dμ/dT AT 0.79 N/mm2

FIG. 4

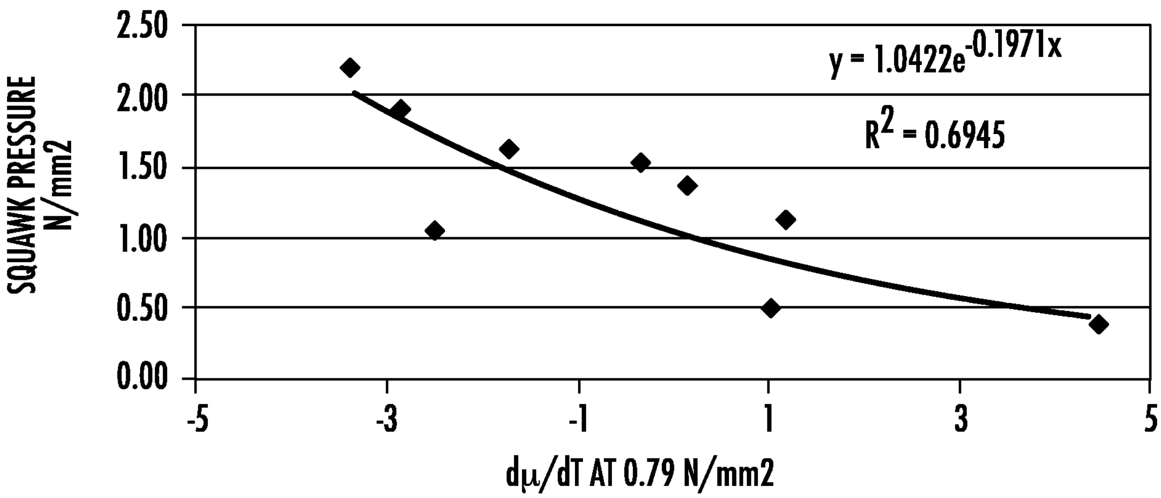
2.50
2.00
1.50
1.00
0.50
0.00
SQUAWK PRESSURE N/mm2
y = 1.0422e-0.1971x
R2 = 0.6945
-5
-3
-1
1
3
5
dμ/dT AT 0.79 N/mm2

FIG. 5

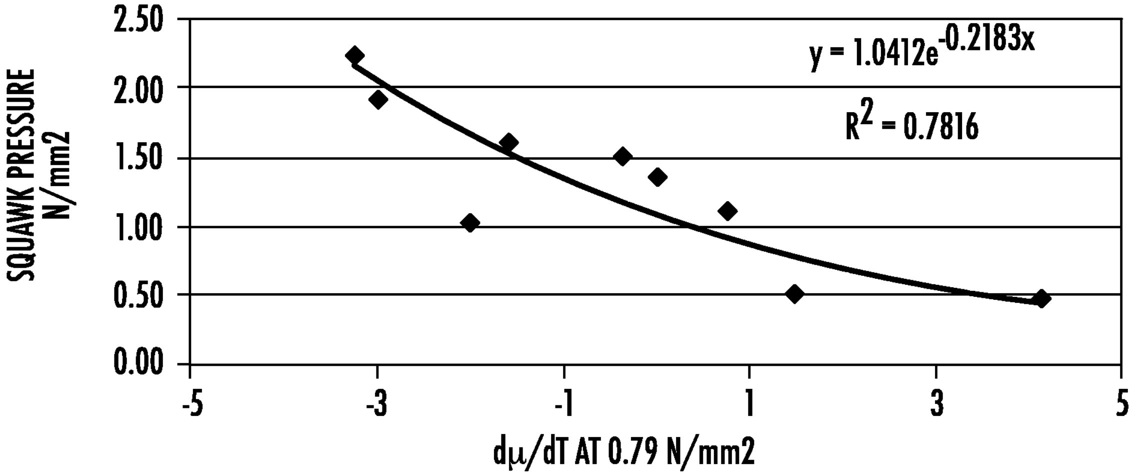
y = 1.0412e-0.2183x
R2 = 0.7816
SQUAWK PRESSURE N/mm2
2.50
2.00
1.50
1.00
0.50
0.00
-5
-3
-1
1
3
5
dμ/dT AT 0.79 N/mm2

FIG. 6

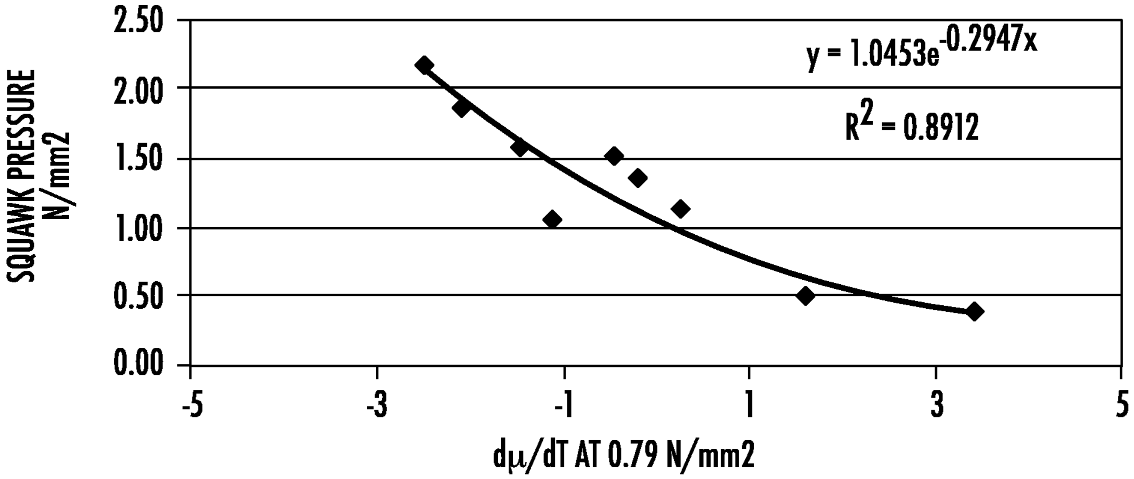
y = 1.0453e-0.2947x
R2 = 0.8912
SQUAWK PRESSURE N/mm2
2.50
2.00
1.50
1.00
0.50
0.00
-5
-3
-1
1
3
5
dμ/dT AT 0.79 N/mm2

FIG. 7

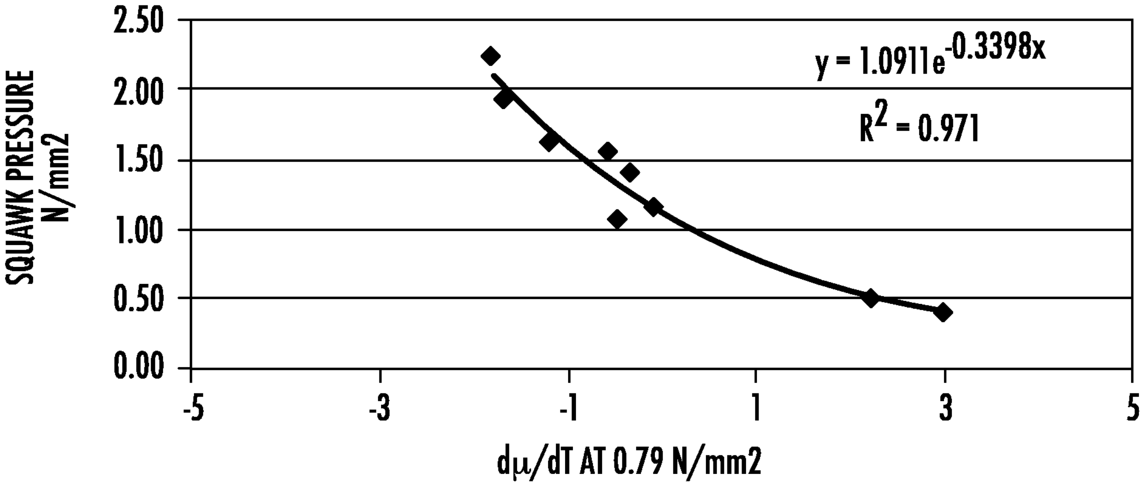
y = 1.0911e-0.3398x
R2 = 0.971
SQUAWK PRESSURE N/mm2
2.50
2.00
1.50
1.00
0.50
0.00
-5
-3
-1
1
3
5
dμ/dT AT 0.79 N/mm2

FIG. 8

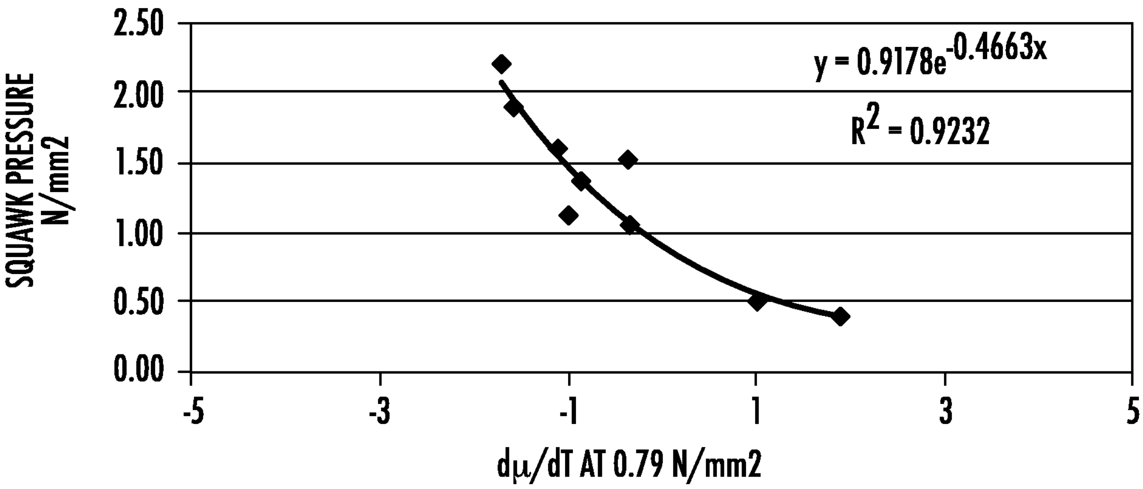
y = 0.9178e-0.4663x
R2 = 0.9232
SQUAWK PRESSURE N/mm2
2.50
2.00
1.50
1.00
0.50
0.00
-5
-3
-1
1
3
5
dμ/dT AT 0.79 N/mm2

FIG. 9

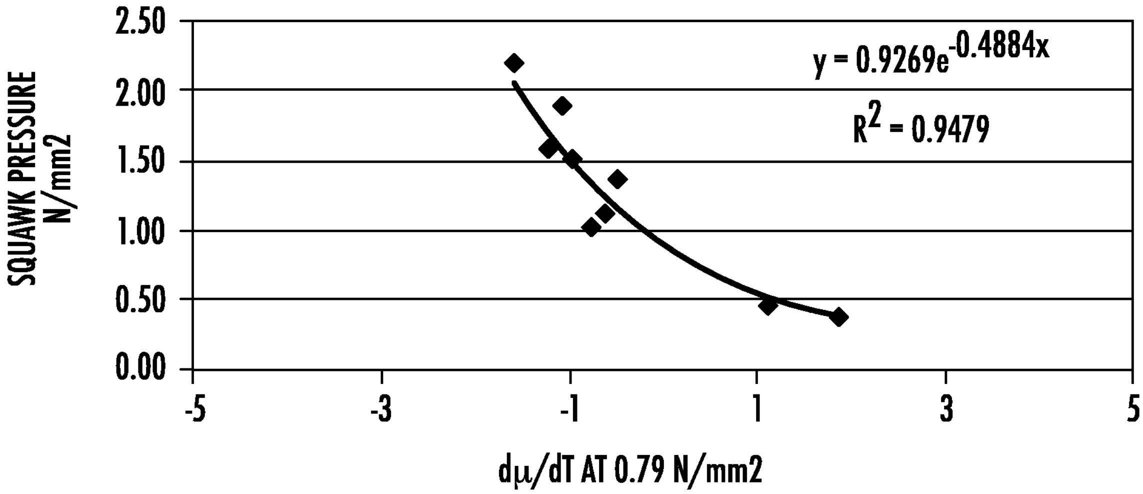
y = 0.9269e-0.4884x
R2 = 0.9479
SQUAWK PRESSURE N/mm2
2.50
2.00
1.50
1.00
0.50
0.00
-5
-3
-1
1
3
5
dμ/dT AT 0.79 N/mm2

FIG. 10

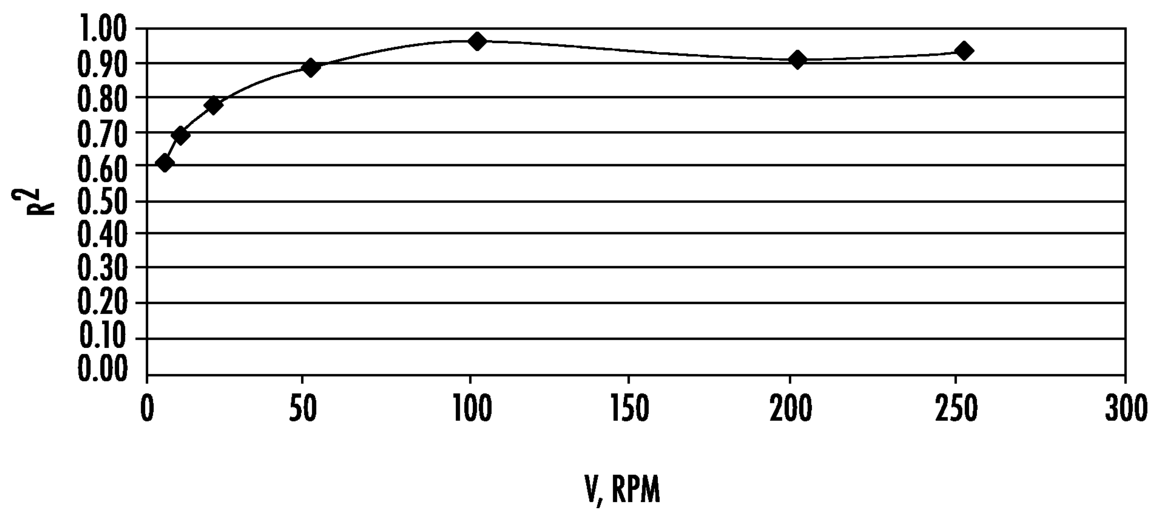
R2
1.00
0.90
0.80
0.70
0.60
0.50
0.40
0.30
0.20
0.10
0.00
0
50
100
150
200
250
300
V, RPM

FIG. 11

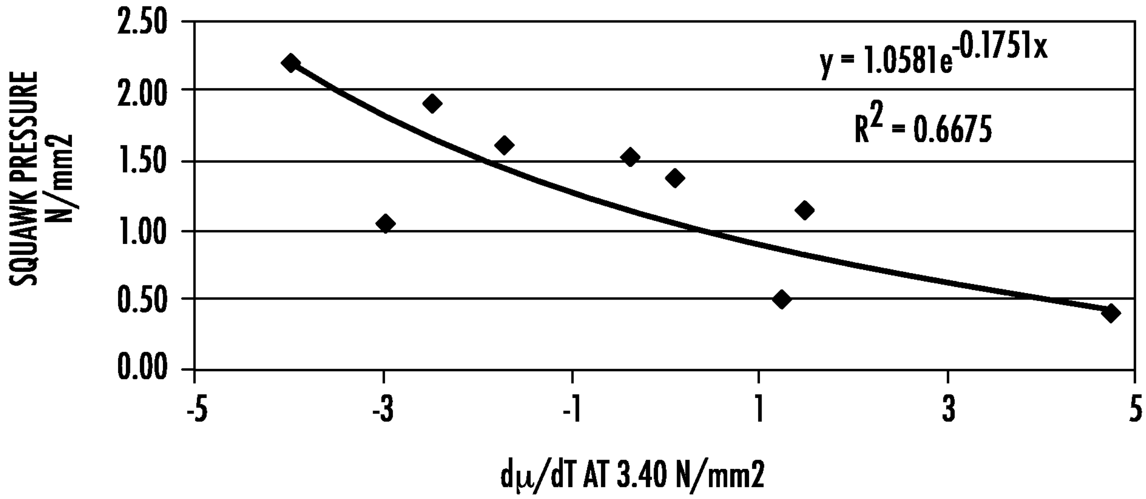
SQUAWK PRESSURE N/mm2
2.50
2.00
1.50
1.00
0.50
0.00
-5
-3
-1
1
3
5
y = 1.0581e-0.1751x
R2 = 0.6675
dμ/dT AT 3.40 N/mm2

FIG. 12

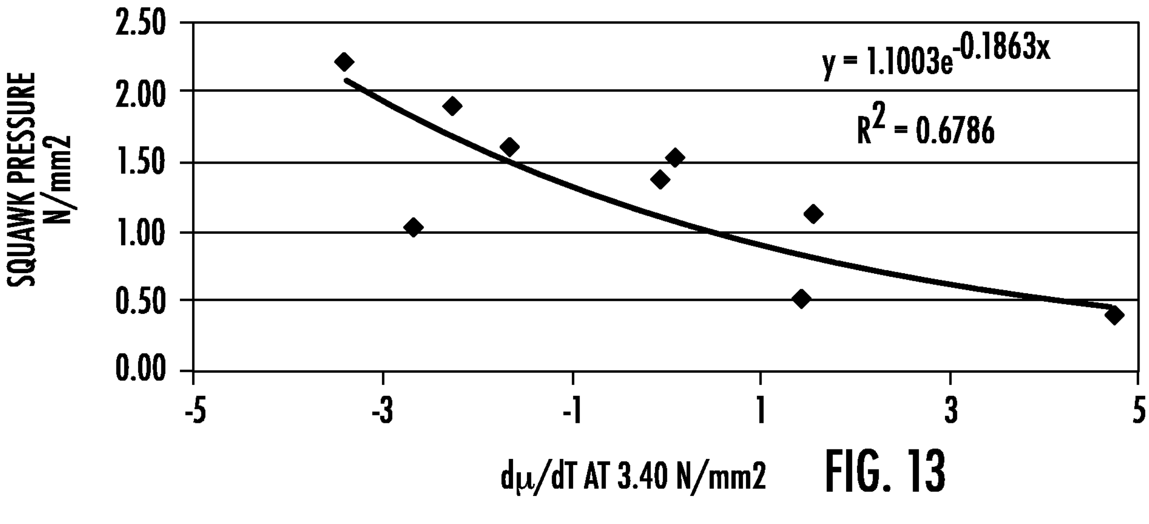
SQUAWK PRESSURE N/mm2
2.50
2.00
1.50
1.00
0.50
0.00
-5
-3
-1
1
3
5
y = 1.1003e-0.1863x
R2 = 0.6786
dμ/dT AT 3.40 N/mm2

FIG. 13

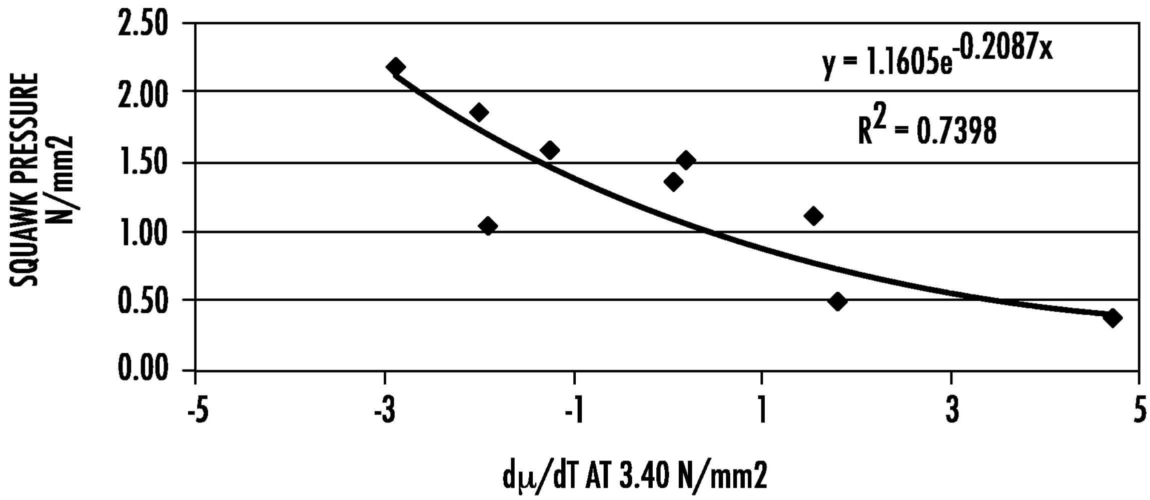
2.50
2.00
1.50
1.00
0.50
0.00
SQUAWK PRESSURE N/mm2
y = 1.1605e-0.2087x
R2 = 0.7398
-5
-3
-1
1
3
5
dμ/dT AT 3.40 N/mm2

FIG. 14

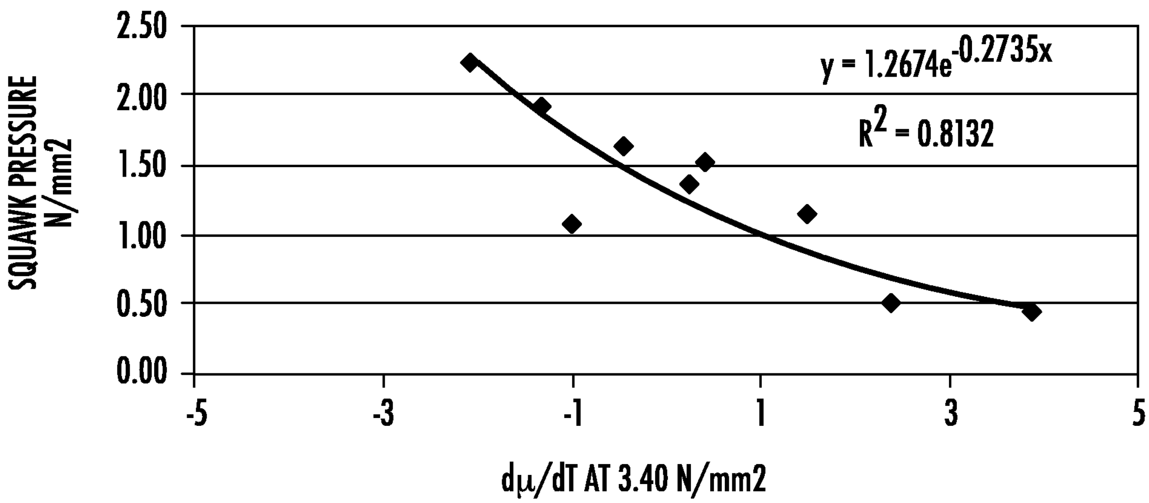
2.50
2.00
1.50
1.00
0.50
0.00
SQUAWK PRESSURE N/mm2
y = 1.2674e-0.2735x
R2 = 0.8132
-5
-3
-1
1
3
5
dμ/dT AT 3.40 N/mm2

FIG. 15

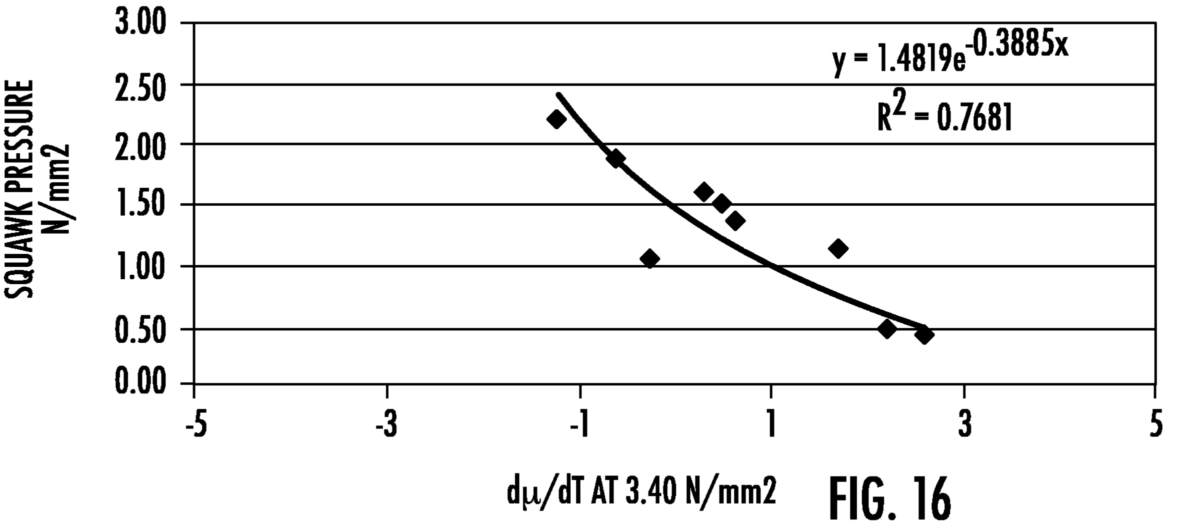
SQUAWK PRESSURE N/mm2
3.00
2.50
2.00
1.50
1.00
0.50
0.00
-5
-3
-1
1
3
5
y = 1.4819e-0.3885x
R2 = 0.7681
dμ/dT AT 3.40 N/mm2

FIG. 16

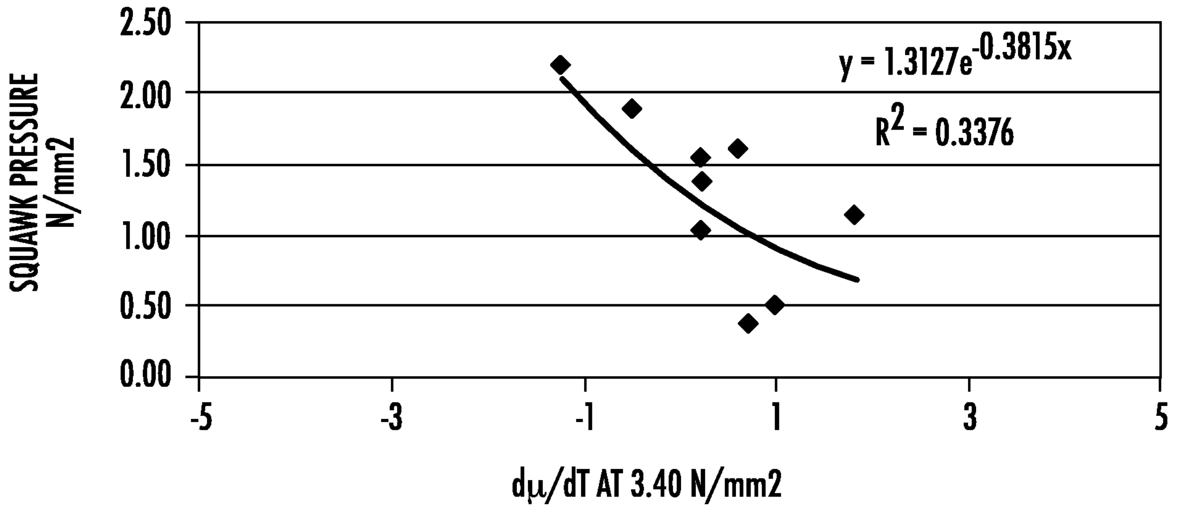
SQUAWK PRESSURE N/mm2
2.50
2.00
1.50
1.00
0.50
0.00
-5
-3
-1
1
3
5
y = 1.3127e-0.3815x
R2 = 0.3376
dμ/dT AT 3.40 N/mm2

FIG. 17

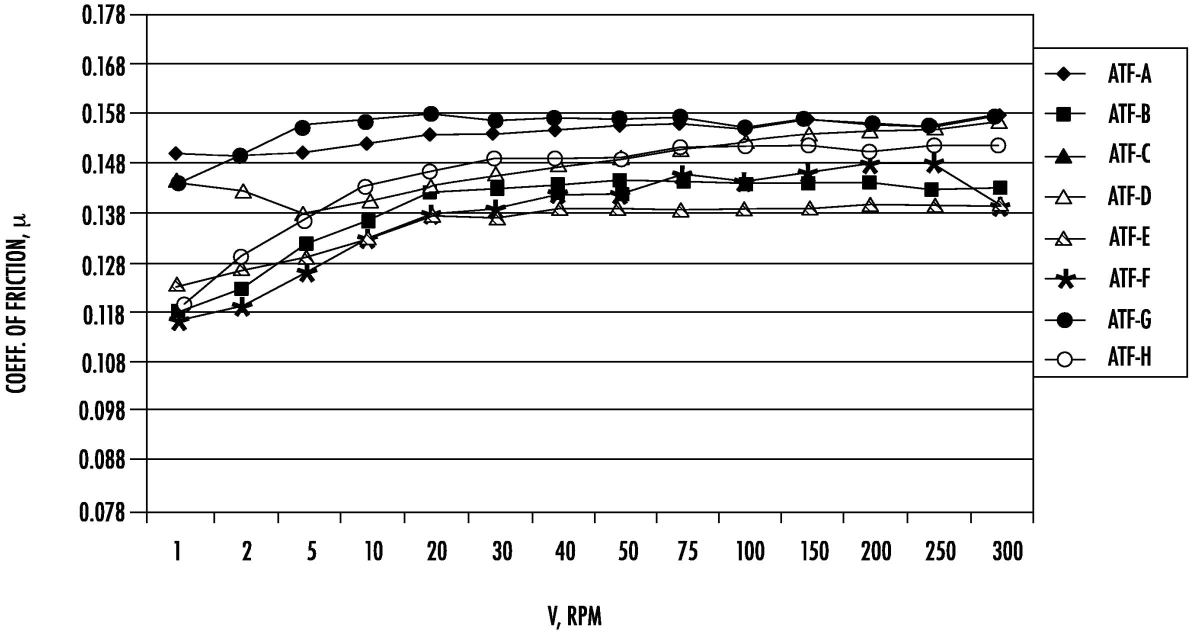
0.178
0.168
0.158
0.148
0.138
0.128
0.118
0.108
0.098
0.088
0.078
COEFF. OF FRICTION, μ
1
2
5
10
20
30
40
50
75
100
150
200
250
300
V, RPM
ATF-A
ATF-B
ATF-C
ATF-D
ATF-E
ATF-F
ATF-G
ATF-H

FIG. 18

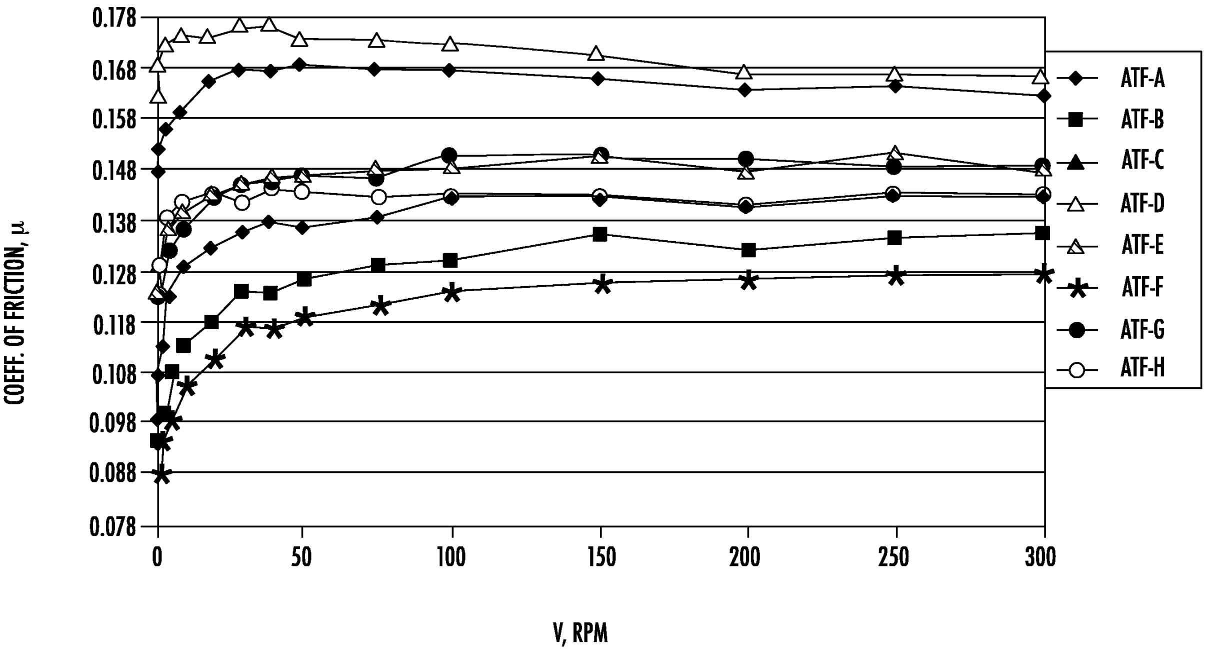
0.178
0.168
0.158
0.148
0.138
0.128
0.118
0.108
0.098
0.088
0.078
COEFF. OF FRICTION, μ
0
50
100
150
200
250
300
V, RPM
ATF-A
ATF-B
ATF-C
ATF-D
ATF-E
ATF-F
ATF-G
ATF-H

FIG. 19

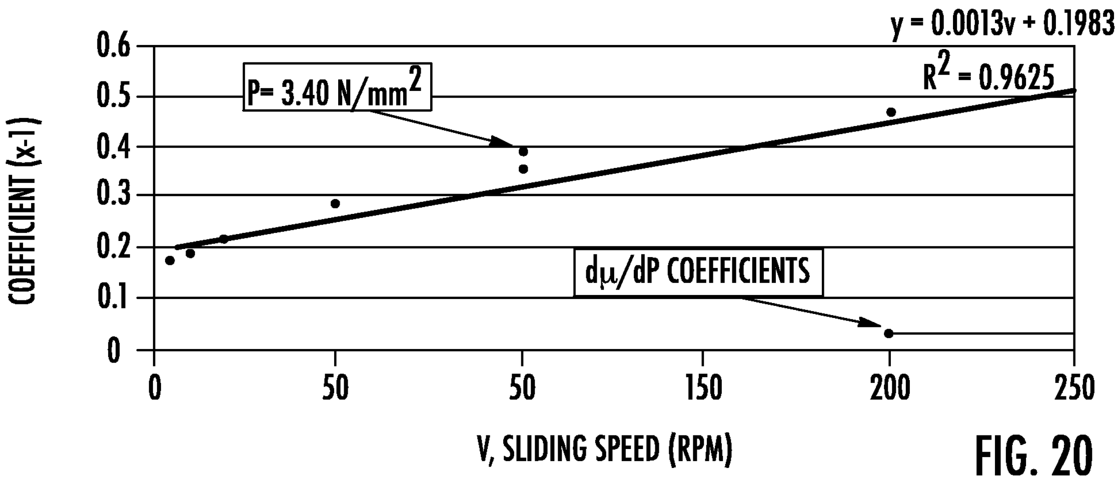
y = 0.0013v + 0.1983
R2 = 0.9625
P= 3.40 N/mm2
dμ/dP COEFFICIENTS
COEFFICIENT (x-1)
0.6
0.5
0.4
0.3
0.2
0.1
0
0
50
50
150
200
250
V, SLIDING SPEED (RPM)

FIG. 20

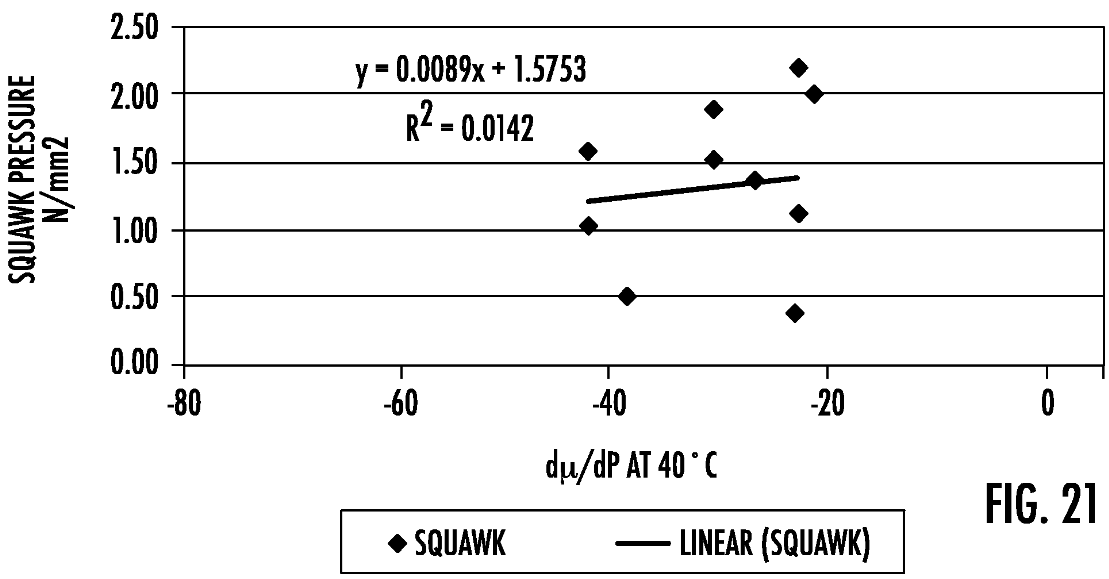
y = 0.0089x + 1.5753
R2 = 0.0142
SQUAWK PRESSURE
N/mm2
2.50
2.00
1.50
1.00
0.50
0.00
-80
-60
-40
-20
0
dμ/dP AT 40 ° C
SQUAWK
LINEAR (SQUAWK)

FIG. 21

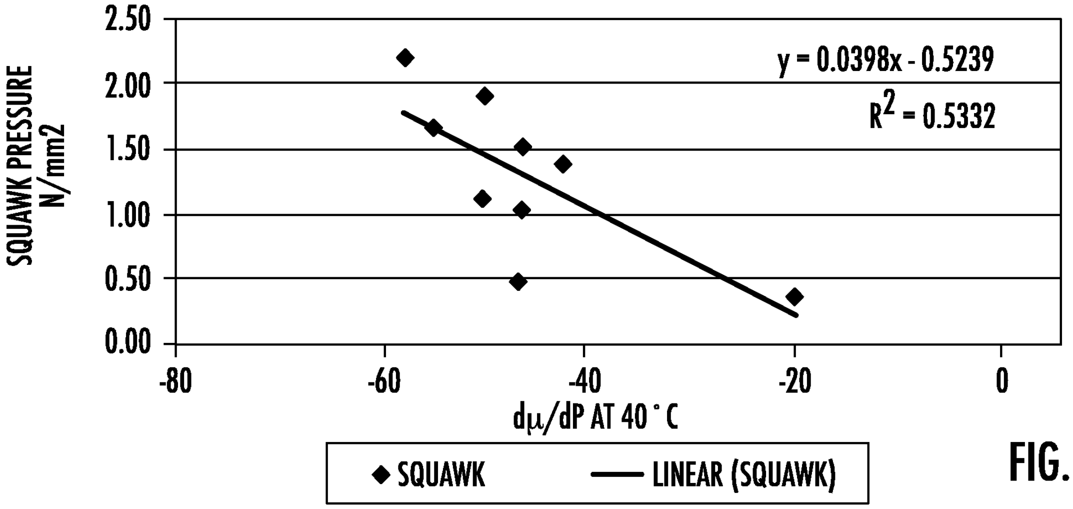
SQUAWK PRESSURE N/mm2
2.50
2.00
1.50
1.00
0.50
0.00
-80
-60
-40
-20
0
dμ/dP AT 40 ° C
y = 0.0398x - 0.5239
$R^2$ = 0.5332
SQUAWK
LINEAR (SQUAWK)

FIG. 22

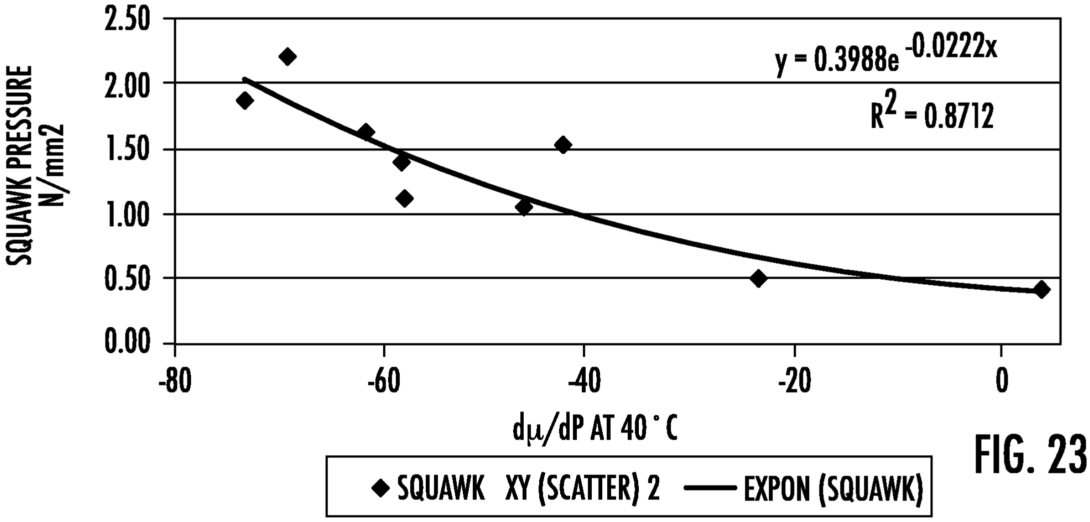
SQUAWK PRESSURE N/mm2
2.50
2.00
1.50
1.00
0.50
0.00
-80
-60
-40
-20
0
dμ/dP AT 40 ° C
y = 0.3988e $^{-0.0222x}$
$R^2$ = 0.8712
SQUAWK XY (SCATTER) 2
EXPON (SQUAWK)

FIG. 23

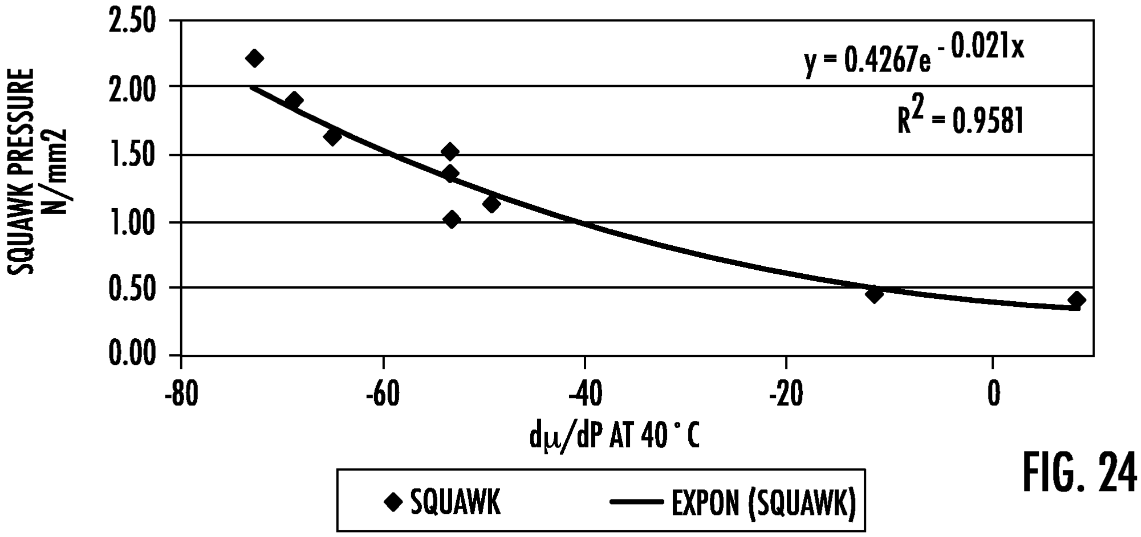
2.50
2.00
1.50
1.00
0.50
0.00
SQUAWK PRESSURE N/mm2
y = 0.4267e - 0.021x
R2 = 0.9581
-80
-60
-40
-20
0
dμ/dP AT 40 ° C
SQUAWK
EXPON (SQUAWK)

FIG. 24

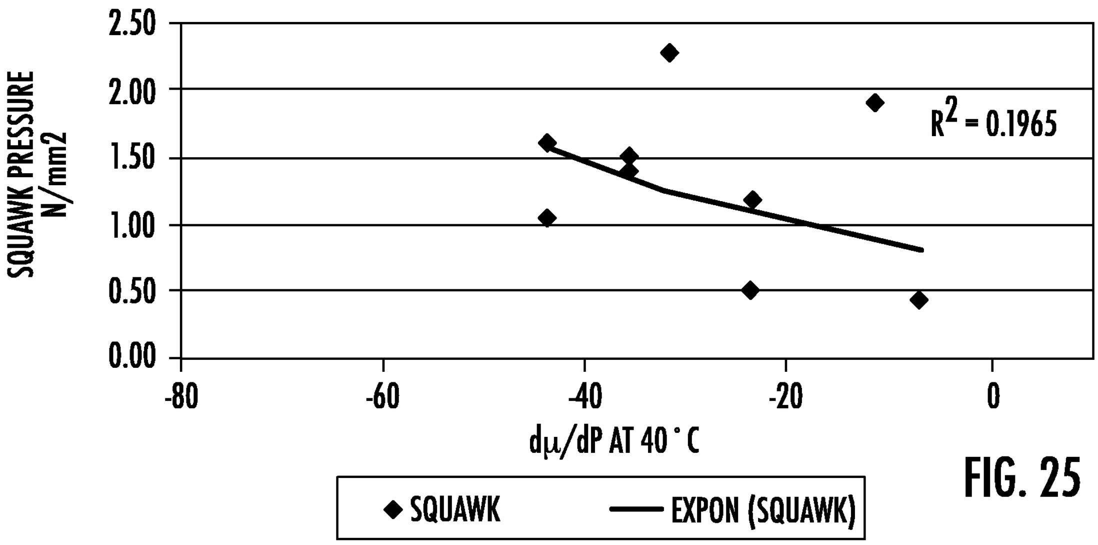
2.50
2.00
1.50
1.00
0.50
0.00
SQUAWK PRESSURE N/mm2
R2 = 0.1965
-80
-60
-40
-20
0
dμ/dP AT 40 ° C
SQUAWK
EXPON (SQUAWK)

FIG. 25

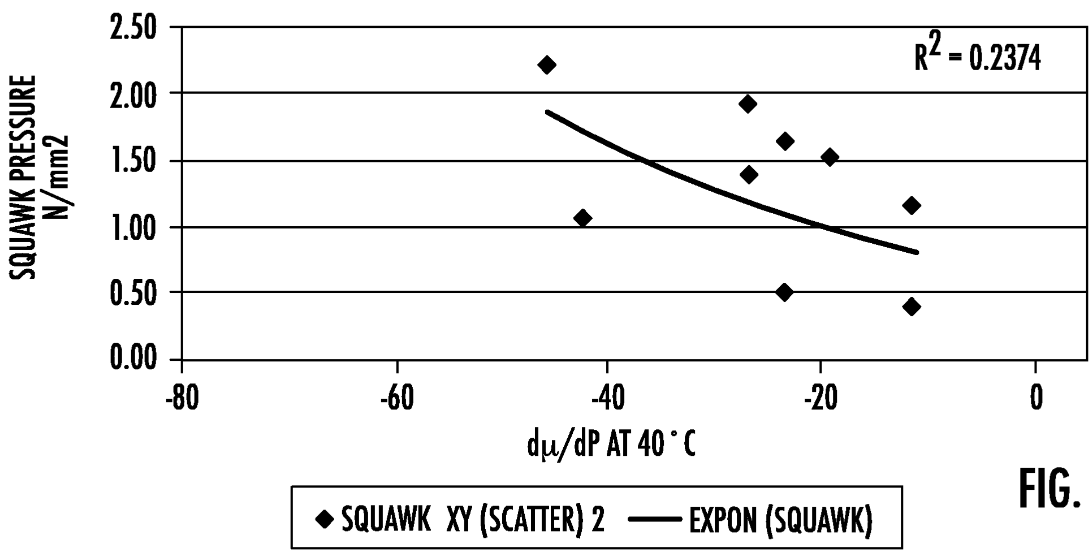
2.50
2.00
1.50
1.00
0.50
0.00
SQUAWK PRESSURE N/mm2
$R^2$ = 0.2374
-80
-60
-40
-20
0
dμ/dP AT 40 ° C
◆ SQUAWK XY (SCATTER) 2
EXPON (SQUAWK)

FIG. 26

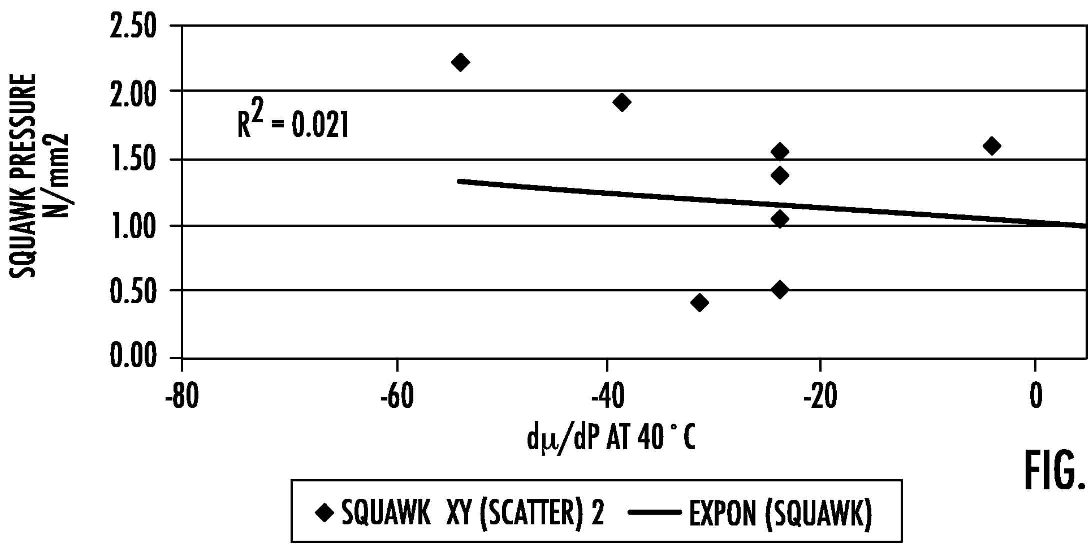
2.50
2.00
1.50
1.00
0.50
0.00
SQUAWK PRESSURE N/mm2
$R^2$ = 0.021
-80
-60
-40
-20
0
dμ/dP AT 40 ° C
◆ SQUAWK XY (SCATTER) 2
EXPON (SQUAWK)

FIG. 27

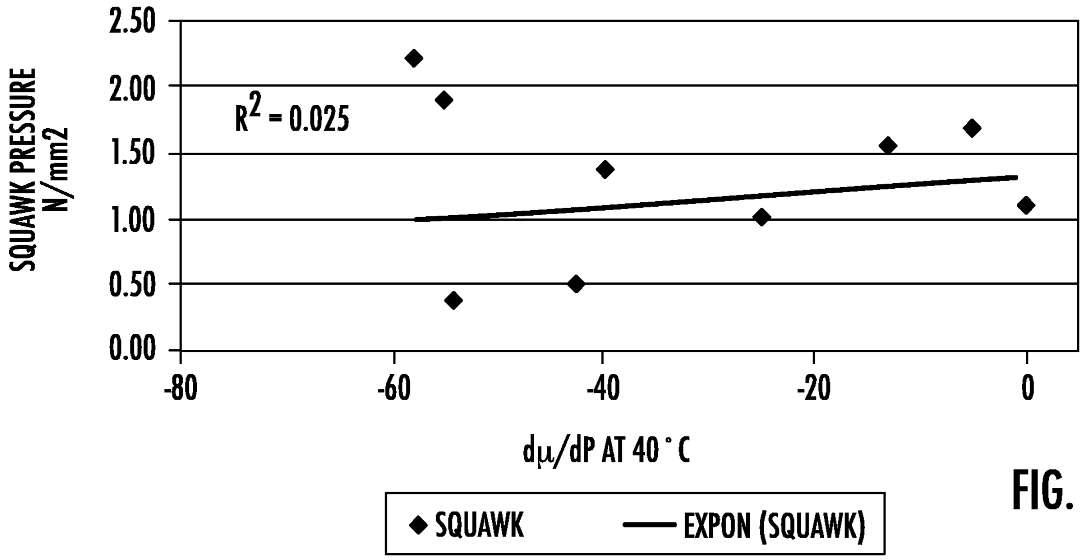
SQUAWK PRESSURE N/mm2
2.50
2.00
1.50
1.00
0.50
0.00
R2 = 0.025
-80
-60
-40
-20
0
dμ/dP AT 40 ° C
SQUAWK
EXPON (SQUAWK)

FIG. 28

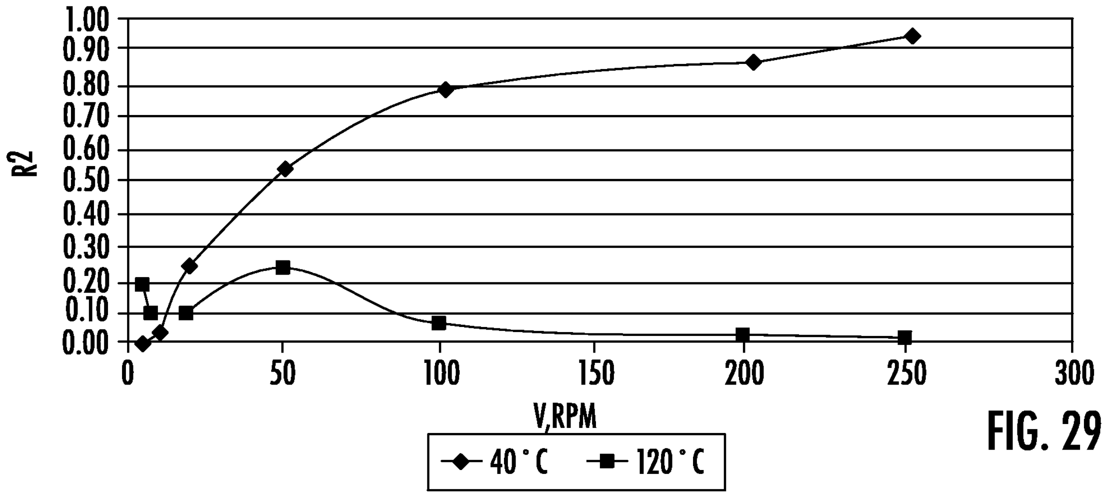
R2
1.00
0.90
0.80
0.70
0.60
0.50
0.40
0.30
0.20
0.10
0.00
0
50
100
150
200
250
300
V,RPM
40 ° C
120 ° C

FIG. 29

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4855074 A
- US 4588415 A
- US 6482778 B
- US 5578235 A
- US 4647387 A
- US 4880550 A
- US 4965003 A
- US 4965004 A
- US 6627584 B
- US 4857214 A
- US 3172892 A
- US 3202678 A
- US 3216936 A
- US 3219666 A
- US 3254025 A
- US 3272746 A
- US 4234435 A
- US 5198133 A
- US 4863623 A
- US 5075383 A
- US 5634951 A
- US 5725612 A
- US 5789353 A
- US 5137980 A
- US 3687849 A
- US 3702300 A
- US RE26433 E
- US 4455243 A
- US 4652387 A
- US 4380499 A
- US 4149982 A
- US 4591645 A
- US 5372735 A
- US 5441656 A
- US 5344579 A
- US 3862798 A
- US 3840549 A
- US 3974081 A
- US 4029587 A
- US 6103099 A
- US 6180575 B
- US 4943672 A
- US 6096940 A
- US 5882505 A
- US 6013171 A
- US 6080301 A
- US 6165949 A